# EUROPÄISCHE PATENTSCHRIFT

(11) **EP 1 374 555 B1**
(45) Veröffentlichungstag und Bekanntmachung des Hinweises auf die Patenterteilung: **27.08.2008**
(21) Anmeldenummer: 02729996.5
(22) Anmeldetag: 12.03.2002
(51) Int. Cl.: H04N 1/00, G03G 15/00

(54) **ÜBER COMPUTERNETZ FERNWARTBARE BÜROMASCHINE UND MEHRERE BÜROMASCHINEN UMFASSENDES MANAGEMENT- ODER/UND UNTERSTÜTZUNGS- ODER/UND BERICHTS- ODER/UND INFORMATIONSSYSTEM**
OFFICE MACHINE THAT CAN BE REMOTE-MAINTENANCED VIA A COMPUTER NETWORK AND A MANAGEMENT OR/AND SUPPORT OR/AND REPORT OR/AND INFORMATION SYSTEM COMPRISING A PLURALITY OF OFFICE MACHINES
MACHINE DE BUREAU POUVANT ETRE ENTRETENUE A DISTANCE PAR L'INTERMEDIAIRE D'UN RESEAU INFORMATIQUE ET SYSTEME DE GESTION ET/OU D'ASSISTANCE ET/OU DE RAPPORT ET/OU D'INFORMATION COMPORTANT PLUSIEURS MACHINES DE BUREAU

(30) Priorität: 21.03.2001 DE 10113837; 21.03.2001 DE 10113836
(43) Veröffentlichungstag der Anmeldung: 02.01.2004
(73) Patentinhaber: Toshiba Tec Germany Imaging Systems Gmbh, 41460 Neuss (DE)
(72) Erfinder: LANDAU, Dirk, 40625 Düsseldorf (DE); ANTZIOPOULOS, Philipp, 41464 Neuss 1 (DE); STOTTMEISTER, Hans-Werner, 41352 Korschenbroich (DE)
(74) Vertreter: Jordan, Volker Otto Wilhelm
(86) Internationale Anmeldenummer: PCT/EP2002/002712
(87) Internationale Veröffentlichungsnummer: WO 2002/078318

(56) Entgegenhaltungen:
- EP-A- 0 733 978
- EP-A- 0 843 230

## Beschreibung

Die vorliegende Erfindung betrifft ein System umfassend eine Mehrzahl von Büromaschinen und wenigstens eine Service-Computereinheit, wobei die jeweilige Büromaschinen eine elektronische Steuereinheit und eine Datenkommunikationsschnittstelle aufweist, wobei über die Datenkommunikationsschnittstelle interne Daten der Büromaschine auslesbar und interne Daten der Büromaschine setzbar sind.

Herkömmlich musste bei Büromaschinen, wie etwa Kopierern, Druckern, Scannern und Faxgeräten, ein Servicetechniker auf eine Anzeige der Büromaschine angezeigte Codes auslesen bzw. zur Konfiguration der Büromaschine Codes manuell eingeben. Eine wesentliche Verbesserung wurde dadurch erreicht, dass beispielsweise Kopierer mit seriellen Schnittstellen ausgeführt wurden, die ein Auslesen von internen Daten der Büromaschine und ein Setzen von internen Daten der Büromaschine ermöglichten. Beispielsweise kann auf diese Weise ein vollständiger Satz an Konfigurationsdaten auf einem externen Gerät, beispielsweise einem tragbaren Computer, zwischengespeichert werden, um nach Austausch der Steuereinheit bzw. einer der Steuereinheit zugeordneten Speichereinheit die Büromaschine neu entsprechend der zuvor geltenden Konfiguration konfigurieren zu können. Auch war auf diese Weise eine Aktualisierung (Update) von Firmware der Büromaschine auf einfache Weise möglich, die beispielsweise in einem EEPROM abgespeichert wird. Zu diesem Auslesen bzw. Setzen von internen Daten einer jeweiligen Büromaschine war aber stets noch ein Servicebesuch durch einen Techniker erforderlich, mit entsprechenden Servicekosten.

Aus der EP 0 733 978 A1 ist ein "network interface board for digital copier" bekannt, welches Funktionalitäten eines digitalen Kopierers über ein Netzwerk zugänglich macht. Hierzu enthält der digitale Kopierer einen Schnittstellenbus, durch welchen ein Scannerteil und ein Druckerteil für eine Datenübertragung zugänglich sind. Mit dem Schnittstellenbus ist ein Controller. verbunden, der die Schnittstelle zu dem Scannerteil und dem Printerteil bereitstellt und zusätzlich weitere Funktionalitäten zur Verfügung stellt.

Aus der EP 0 843 230 A2 ist ein Internet- und LAN-gestütztes Femwartungssystem bekannt, bei dem von einer übergeordneten Computereinheit einer technischen Service-Organisation eine Fernwartung von Kopierern erfolgen kann. Diese Fernwartung erfolgt durch einen an der übergeordneten Computereinheit sitzenden Techniker, der entsprechende Befehle eingibt. Es findet also gewissermaßen eine "Fernsteuerung" und "Fernabfrage" des jeweiligen Kopierers statt.

Von dem Kopierer werden automatisch Service-Anforderungen an die Service-Organisation abgesetzt und an die übergeordnete Computereinheit der Service-Organisation gesendet.

Die Erfindung geht insweit davon aus, dass der jeweiligen Buromaschine eine an einem Computernetz angeschlossene oder anschließbare Computereinheit zugeordnet ist, die auf interne Daten der Büromaschine zugreifen kann und dafür ausgelegt ist, ein Auslegen von internen Daten der Büromaschine über das Computernetz und ein Setzen von internen Daten der Büromaschine über das Computernetz zu ermöglichen, genauer dass den Büromaschinen jeweils eine Computereinheit zugeordnet ist, die auf interne Daten der Büromaschine zugreifen kann und dafür ausgelegt ist, ein Auslesen von internen Daten der jeweiligen Büromaschine und ein Setzen von internen Daten der Büromaschine Zumindest per Datenkommunikation über ein Computernetz zu ermöglichen.

Die Erfindung geht ferner davon aus, dass die den Büromaschinen zugeordnete Computereinheiten und die Service-Computereinheit jeweils an einem Computernetz angeschlossen oder anschließbar sind und dafür ausgelegt sind, dass von Seiten der Service-Computereinheit interne Daten der Büromaschine per Datenkommunikation über das Computernetz auslesbar sind und dass von Seiten der Service-Computereinheit interne Daten der Büromaschine per Datenkommunikation über das Computernetz setzbar sind oder/und interne Betriebssoftware oder Firmenware aktualisierbar ist.

Der Erfindung liegt die Aufgabe zu Grunde, ein System der angesprochenen Art bereitzustellen, welches das Management einer Mehrzahl von Büromaschinen und deren Wartung weiter vereinfacht und kostengünstiger macht. Zur Lösung dieser Aufgabe wird das System mit den Merkmalen des Anspruchs 1 bereitgestellt.

Erfindungsgemäß ist die übergeordnete Service-Computereinheit dafür ausgeführt, dass diese selbst Service-Einsätze in Bezug auf die Büromaschinen anfordert und ausgelesene Daten auswertet und entsprechende Berichtsdaten erstellt, wie im Folgenden noch näher ausgeführt.

Durch den Erfindungsvorschlag kann die Zahl von erforderlich werdenden Servicebesuchen wesentlich reduziert werden, da viele Probleme gewissermaßen durch eine "Fernwartung" durch eine externe Stelle, etwa von einer Büromaschinenverleihfirma, einem Büromaschinenhändler oder einer Servicestelle des Herstellers, behoben werden können. Dies hat für den Kunden (dort wo die Büromaschine steht) den Vorteil einer höheren Servicequalität, insbesondere eines schnelleren Services, sowie den Vorteil der Einsparung von Servicekosten. Für den Hersteller bzw. den Händler bzw. die Verleihfirma ergeben sich ebenfalls wesentliche Vorteile, nämlich eine bessere Kundenzufriedenheit und die Möglichkeit, beispielsweise die Bedürfnisse von Großkunden besser abdecken zu könenn. Ferner kann durch den Empfang von aktuellen "Felddaten" von den verschiedenen zu wartenden Büromaschinen ein besserer Überblick über die Performance der Büromaschinen erhalten werden, so das Probleme möglicherweise schon im Vorfeld aufgedeckt werden und Vorbeugemaßnahmen bei der Kundschaft getroffen werden können oder/und in der laufenden Serienfertigung des betreffenden Büromaschinentyps schnell Modifikationen einfließen können, die dem betreffenden Problem vorbeugen. Der Erfindungsvorschlag eröffnet ferner die Möglichkeit, die Büromaschinen, insbesondere eine oder mehrere Gruppen von Büromaschinen, von einer zentralen Stelle aus zu betreuen, etwa in der Art, wie weiter unten näher erläutert wird.

Die angesprochene, ggt-drahtlose Datenkommunikation kann für die angesprochene "Fernwartung" verwendet werden oder/und für einen Zugriff auf die internen Daten der Büromaschine während eines Servicebesuchs eines Technikers, etwa mittels eines transportablen Technikercomputers. Es bietet sich beispielsweise eine drahtlose Datenkommunikation nach dem Bluetooth-Standard oder/und nach einem Wireless-LAN-Standard an.

Die erfindungsgemäße Computereinheit kann vorteilhaft dafür ausgelegt sein, gemäß einem vorgegebenen Abfrageschema interne Daten der Büromaschine abzufragen oder/und gemäßeinem vorgegebenen Berichtsschema auf den abgefragenen Daten beruhende Berichtsdaten an eine zugeordnete Datenkommunikationsadresse zu übermitteln. Die Datenkommunikationsadresse kann beispielsweise ein zugeordnetes Service-Computersystem identifizieren, von dem eine Fernwartung oder/und Überwachung der Büromaschine erfolgt. Eine zweckmäßige Ausgestaltung zeichnet sich dadurch aus, dass nicht ständig ein vollständiger Berichtsdatensatz übermittelt wird, sondern dass nur Änderungen gegenüber einem vorangehenden Zustand mitgeteilt werden.

Es wird insbesondere daran gedacht, dass die Datenkommunikation zum Auslesen und Setzen der internen Daten auf Grundlage der Internet-Technologie erfolgt, insbesondere unter Anwendung des TCP/IP-Protokolls. Der jeweiligen Büromaschine bzw. der zugeordneten Computereinheit kann dann eine eigene IP-Adresse zugeordnet sein. Die Computereinheit kann dann vorteilhaft WEB-Server-Funktionalität aufweisen oder als WEB-Server konfiguriert oder konfigurierbar sein. Das Computernetz kann dann das Internet oder/und ein Intranet umfassen.

Es ist aber durchaus möglich, dass das Computernetz alternativ oder zusätzlich auch ein LAN oder WAN umfasst. Beispielsweise kann die Datenkommunikation auf Seiten der Computereinheit bzw. der Büromaschine oder/und auf Seiten einer zugeordneten Servicestelle zuerst über ein LAN verlaufen, das einen Übergang zum Internet aufweist.

Die elektronische Steuereinheit der Büromaschine kann die Computereinheit bilden. In diesem Fall kann die Datenkommunikationsschnittstelle als Computernetz-Datenkommunikationsschnittstelle ausgeführt sein. Eine andere Möglichkeit ist, dass die Computereinheit eine eigene Computernetz-Datenkommunikationsschnittstette aufweist. Letzteres ist insbesondere dann zweckmäßig, wenn die Computereinheit eine gegenüber der Büromaschine an sich externe Einheit ist, die beispielsweise an der Datenkommunikationsschnittstelle der Büromaschine angeschlossen oder anschließbar ist. Durch eine gegenüber der Büromaschine an sich externe Computereinheit, die erst noch an der Büromaschine anzuschließen ist, können auch schon ausgelieferte Büromaschinen gemäß dem Erfindungsvorschlag nachgerüstet werden. Bei der Datenkommunikationsschnittstelle der Büromaschine kann es sich beispielsweise um eine serielle Schnittstelle oder eine parallele Schnittstelle oder eine Ethernet-Schnittstelle handeln.

Es wird insbesondere daran gedacht, dass die Büromaschine als Kopiergerät oder dergleichen ausgebildet ist. Allgemeiner: Die Büromaschine kann als Kopiergerät oder/und Druckergerät oder/und Telefaxgerät oder/und Scanner ausgebildet sein bzw. - im Falle eines Mehrfunktionsgeräts - entsprechende Funktionalitäten aufweisen. Hierzu wird insbesondere vorgeschlagen, dass über das Computernetz zumindest einige der folgenden internen Daten auslesbar sind:
- Seriennummer der Geräts oder/und wenigstens einer internen Komponente des Geräts,
- Zählerstand eines allen Papier-Einzügen oder/und Kopierwerken des Geräts zugeordneten Gesamt-Zählers,
- wenigstens ein Zählerstand eines Wartungszählers oder/und Abrechnungszählers oder/und wenigstens eines sonstigen Zählers, ggf. wenigstens ein einem einzelnen Papier-Einzug des Geräts zugeordneter Zählerstand oder/und wenigstens ein einem einzelnen Kopierwerk des Geräts zugeordneter Zählerstand,
- Fehlermeldungen oder/und sonstige Zustandsdaten (beispielsweise Informationen über "Papiermangel" (bzw. "Cassette leer") und "Tonermangel")
- Konfigurationsdaten
- Betriebssoftware- oder Firmware-Version.

Um einen relativ umfassenden Service per "Fernwartung" bieten zu können, sollten über das Computernetz zumindest Konfigurationsdaten des Geräts setzbar sein. Ferner ist es zweckmäßig, dass über das Computernetz wenigstens ein Zähler, ggf. Wartungszähler, rücksetzbar ist. Ferner wird in der Regel zu einem umfassenden Service per "Fernwartung" gehören, dass über das Computernetz interne Betriebssoftware oder Firmware aktualisierbar ist.

Eine besonders hohe Servicequalität lässt sich erreichen, wenn die Datenkommunikation zum Auslesen bzw. Setzen der internen Daten (einschließlich der ggf. vorgesehenen Aktualisierung von Software) über das Computernetz von einer zugeordneten, ggf. externen Service-Computereinheit initiierbar ist. Die Fernwartung kann dann auch unabhängig von Einwirkungen auf Seiten des Kunden, etwa an der Büromaschine bzw. der Computereinheit, durchgeführt werden.

Bei der Service-Computereinheit kann es sich um eine Computereinheit einer Servicestelle des Büromaschinenherstellers, eines Büromaschinenhändlers, einer Büromaschinen-Verleihfirma oder eines sonstigen ServiceProviders handeln, der auf die erläuterte Art und Weise im Sinne einer Fernwartung auf die angeschlossenen Büromaschinen zugreifen kann.

Bei der Service-Computereinheit kann es sich aber auch um eine Computereinheit einer Service- oder Managementstelle einer die angeschlossenen Büromaschinen in Besitz bzw. zur Verfügung habenden Firma oder Organisation handeln, die die angeschlossenen Büromaschinen zur Aufrechterhaltung ihrer Nutzbarkeit betreut und ggf. im Sinne eines so genannten "Facility Management" oder "Fleet Management" verwaltet. Eine derartige Zuordnung der Service-Computereinheit ist besonders nützlich, wenn eine Firma oder Organisation eine vergleichsweise große Anzahl von Büromaschinen einsetzt bzw. einsetzen möchte. Man kann dann vorsehen, dass etwaige Fehlermeldungen der Büromaschinen von der Service-Computereinheit ausgewertet werden und hierauf entsprechend reagiert wird, entweder per Datenkommunikation über das Computernetz im Sinne der Fernwartung oder durch Veranlassung von händischer Wartung. An der Service-Computereinheit können stets aktuelle Informationen über Zählerstände, Toner- und Papiervorrat, Maschinenverfügbarkeit sowie Fehlermeldungen und Fehlerhistorie betreffend die zugeordneten Büromaschinen vorliegen. Dies ermöglicht, dass eine entsprechend beauftragte Person ("Facility Manager") schnell und auf Basis zuverlässiger Informationen agieren kann, um beispielsweise einen Kundendiensttechniker zu informieren, der dabei direkt mit den notwendigen Daten über die betroffene Maschine versorgt werden kann. Wie unten noch näher angesprochen, ist erfindungsgemaß vorgesehen, dass die Service-Computereinheit auch direkt einen firmen- bzw. organisationsinternen oder/und einen externen Kundendienst oder Techniker per Datenkommunikation bzw. Telekommunikation automatisiert informiert, beispielsweiser per E-Mail oder SMS. Bevor überhaupt eine Störung oder ein Ausfall eines Bürogerätes bemerkbar wird, können schon entsprechende Abhilfemaßnahmen getroffen sein. Beispielsweise kann der Facility-Manager oder Techniker rechtzeitig Toner und Papier nachfüllen, Papierstau beseitigen und es können geeignete Fernwartungsaktivitäten eingeleitet werden.

Es sollte erwähnt werden, dass der Service-Computereinheit verschiedene Gruppen von Büromaschinen zugeordnet sein können, beispielsweise Büromaschinen einer "Hauptverwaltung", in der auch die Service-Computereinheit bzw. die angesprochene Facility-Management-Stelle angesiedelt sein könnte, und Büromaschinen einer oder mehrerer Niederlassungen. In diesem Zusammenhang wird vorgeschlagen, dass die Service-Computereinheit über ein erstes Computernetz mit Computereinheiten in Kommunikationsverbindung steht, die einer ersten Gruppe von Büromaschinen zugeordnet sind, und dass die Service-Computereinheit über ein zweites Computernetz mit Computereinheiten in Kommunikationsverbindung steht, die wenigstens einer weiteren Gruppe von Büromaschinen zugeordnet sind.

Das erste Computernetz kann ein LAN, WAN oder Intranet umfassen, nicht aber unbedingt das Internet. Es wird beispielsweise an das Computernetz der angesprochenen Hauptverwaltung gedacht.

Das zweite Computernetz kann das Internet umfassen. Es bietet sich insbesondere an, Niederlassungen wie angesprochen über das Internet an der Service-Computereinheit anzubinden.

Wie schon angespruchen, zeichnet sich das System erfindungsgemaß dadurch aus, dass die Service-Computereinheit eine Auswerte-Funktionalität zur automatisierten Auswertung von ausgelesenen internen Daten der Büromaschinen oder/und eine Berichts-Funktionalität zur automatisierten Bereitstellung von Berichtsdaten und ggf. von auf den Berichtsdaten beruhenden Berichten an einer Nutzerschnittstelle auf Grundlage der ausgelesenen Daten und ggf. der durchgeführten Auswertung oder Auswertungen aufweist. Es wird beispielsweise an die Erstellung von Benutzer-Statistiken, Kostenauswertungen, Anzahl von gemachten Kopien, Drucken, Faxseiten, Scans usw. gedacht. Beispielsweise kann vorgesehen sein, dass die einzelnen Leistungen (etwa Faxen, Scannen, Drucken, Kopieren in schwarz/weiß oder Farbe) pro Gerät und zugeordnete Kostenstelle ausgewertet werden. Ferner wird gedacht an statistische Auswertungen von auftretenden Fehlermeldungen und Maschinenausfällen, beispielsweise zur Ermittlung einer mittleren Ausfallzeit bezogen auf die einzelnen Maschinen oder Maschinentypen und die jeweils auftretenden Fehler. Weiterhin kann auch eine Auslastungsanalyse vorgesehen sein, die vorzugsweise nach wählbaren Kriterien erfolgen kann, beispielsweise nach frei wählbaren Zeiträumen oder nach Funktionalitäten wie Faxen, Drucken, Scannen.

Auf Grundlage der Auswertungen, insbesondere Statistiken, ist es möglich, durch vorbeugende Wartungsmaßnahmen eine hohe Verfügbarkeit des Büromaschinenparks (der Büromaschinenflotte) zu gewährleisten.

Die ausgelesenen internen Daten oder - vorzugsweise - hierauf beruhende Auswertedaten sind unter Umständen auch für externe Stellen, wie etwa ein Service-Provider oder der Maschinenhersteller, von Interesse. Es kann deshalb vorgesehen sein, dass derartige Daten per Datenkommunikation an ein zugeordnetes Computersystem der betreffenden Stelle übersendbar oder/und von dieser Stelle abrufbar sind.

Es wurde schon angesprochen, dass vermittels der Service-Computereinheit Wartungs- oder Service-Arbeiten an den zugeordneten Büromaschinen initiiert oder zumindest unterstützt werden. Hierzu ist erfindung gemäß vorgesehen, dass die Service-Computereinheit eine Benachrichtigungsfunktionalität zum automatisierten Bereitstellen und ggf. Versenden von sich auf vorbeugende oder/und akute Wartungs- oder Service-Arbeiten an wenigstens einer der Büromaschinen beziehenden Daten oder/und Mitteilungen per Datenkommunikation oder/und Telekommunikation an wenigstens ein zugeordnetes Kommunikationsgerät oder/und wenigstens eine zugeordnete weitere Computereinheit aufweist. Beispielsweise kann vorgesehen sein, dass die Service-Computereinheit per Mobiltelefon (akustisch oder mittels SMS-Mitteilung oder dergleichen), E-Mail, Funkruf oder sonstige Daten- bzw. Telekommunikation direkt einen Techniker oder eine Unterstützungsperson darüber informiert, dass an einem bestimmten Gerät Wartungs- oder Unterstützungsarbeiten (etwa Nachfüllen von Toner und Papier oder Beseitigung eines Papierstaus) durchgeführt werden müssen. Bei dieser Unterstützungsperson kann es sich um einen Angestellten der Organisation bzw. der Firma selbst handeln.

Im Falle von schwerwiegenderen Störfällen oder im Falle, dass aufwendigere, nur durch einen Spezialisten zu erledigende Arbeiten nötig sind, kann die Service-Computereinheit demgegenüber eine externe Stelle (insbesondere Service-Provider) entsprechend unterrichten. Hierzu wird speziell vorgeschlagen, dass die zugeordnete weitere Computereinheit einem computergestütztes Service-Management- oder/und Unterstützungs- oder/und Bericht-System zugeordnet (vorzugsweise zugehörig) ist. Dieses System umfasst vorzugsweise ein die weitere Computereinheit umfassendes erstes Computersystem, das Stammdaten betreffend Kunden oder/und potentiell zu wartende Maschinen, beispielsweise Büromaschinen wie Kopierer, Drucker, Scanner und Telefaxgeräte oder entsprechende Funktionalitäten aufweisende Multifunktionsgeräte, in einer Datenbasis hält und in das Anfragedaten betreffend Service- oder Wartungsanfragen eingebbar sind, wenigstens ein mobiles zweites Computersystem, das eine Datenkommunikationsschnittstelle zum Empfang von Serviceauftragsdaten vom ersten Computersystem per Datenkommunkation, insbesondere per drahtloser Datenkommunikation, und zum Übersenden von sich auf erledigte oder/und in Arbeit befindliche Serviceaufträge oder/und Folge-Serviceaufträge beziehenden Berichtsdaten und ggf. Ersatzteil-Bestelldaten an das erste Computersystem per Datenkommunkation, insbesondere per drahtloser Datenkommunikation, aufweist. Vorzugsweise generiert das erste Computersystem automatisiert auf Grundlage der Stammdaten und der Anfragedaten Serviceauftragsdaten und übermittelt diese an das zweite Computersystem, ggf. durch dieses initiiert, per Datenkommunikation. Alternativ oder zusätzlich kann vorgesehen sein, dass das zweite Computersystem automatisiert Berichtsdaten an das erste Computersystem per Datenkommunikation übermittelt.

Es wird in diesem Zusammenhang speziell daran gedacht, dass die Benachrichtigungsfunktionalität dafür ausgelegt ist, in Abhängigkeit von ausgelesenen internen Daten Anfragedaten betreffend Service- oder Wartungsanfragen vermittels der weiteren Computereinheit in das erste Computersystem einzugeben. Ferner kann vorgesehen sein, dass die Berichts-Funktionalität dafür ausgelegt ist, Berichtsdaten vermittels der weiteren Computereinheit an das erste Computersystem zu übergeben.

Die Erfindung betrifft ferner auch ein Gesamtsystem, das das erfindungsgemäße System und das vorstehend angesprochene computergestützte Service-Management oder/und Unterstützungs- oder/und Bericht-System umfasst. Ferner betrifft die Erfindung ein Gesamtsystem, das mehrere erfindungsgemäße Systeme wie vorstehend angesprochen und ein diesen gemeinsam zugeordnetes computergestütztes Service-Managementoder/und Unterstützungs- oder/und Bericht-System wie vorstehend angesprochen umfasst.

Soweit es um Nutzbarmachung von auf internen Daten der Büromaschinen beruhenden Informationen durch eine übergeordnete Stelle, beispielsweise den Büromaschinenhersteller, und die Unterstützung von lokalen Servicemaßnahmen durch eine übergeordnete Stelle, beispielsweise den Büromaschinenhersteller, geht, kann es vorteilhaft sein, gegenüber den angesprochenen Gesamtsystemen noch ein übergeordnetes computergestütztes Informationssystem vorzusehen. Die Erfindung betrifft demgemäß ferner ein Gesamtsystem, das mehrere Gesamtsysteme wie vorstehend angesprochen sowie ein diesen gemeinsam zugeordnetes computergestütztes Informationssystem umfasst. Das zugeordnete computergestützte Informationssystem umfasst wenigstens ein Computersystem, das Informationsdaten betreffend Büromaschinentypen und deren Wartung in einer Datenbasis hält zum Abruf durch oder/und zum Versenden an ein jeweiliges Service-Managementoder/und Unterstützungs- oder/und Bericht-System per Datenkommunikation, oder/und das eine Funktionalität zum Empfangen und Ablegen in einer Datenbasis sowie ggf. Auswerten von von den Service-Managementoder/und Unterstützungs-oder/und Bericht-SystemenperDatenkommunikation übermittelten Berichtsdaten aufweist.

Wieder Bezug nehmend auf die Benachrichtigungsfunktionalität der oben angesprochenen Service-Computereinheit wird weiterbildend vorgeschlagen, dass die Benachrichtigungsfunktionalität dafür ausgelegt ist, in Abhängigkeit von den ausgelesenen Daten oder auf diesen beruhenden abgeleiteten Daten zwischen mehreren zugeordneten Kommunikationsgeräten oder/und mehreren zugeordneten weiteren Computereinheiten auszuwählen, an das bzw. die die sich auf vorbeugende oder/und akute Wartungs- oder Service-Arbeiten an wenigstens einer der Büromaschinen beziehenden Daten oder/und Mitteilungen bereitzustellen bzw. zu versenden sind. Bei diesem Weiterbildungsvorschlag geht es um die schon erläuterte Möglichkeit, dass in Abhängigkeit von Maschinenzuständen zwischen verschiedenen Kommunikationswegen und damit die Benachrichtigung bzw. Daten empfangenden Stellen eine Auswahl getroffen wird, um so bedarfsgerecht zu reagieren.

Nach einer besonders bevorzugten Ausgestaltung ist vorgesehen, dass die Service-Computereinheit eine Rundruf- oder/und Such-Funktionalität aufweist, die zugeordnete Büromaschinen vermittels der jeweils zugeordneten Computereinheit über das Computernetz erkennt. Es kann beispielsweise vorgesehen sein, dass die Service-Computereinheit nach einem vorgegebenen Schema (insbesondere regelmäßig) das Computernetz innerhalb eines vorgegebenen Adressenbereichs absucht bzw. per Rundruf (Broadcast) an die Adressen dieses Adressenbereichs Rückmeldeaufforderungen sendet, um neu angeschlossene Büromaschinen bzw. die erfindungsgemäßen Computereinheiten dieser Büromaschinen zu erkennen bzw. eine Rückmeldung von diesen zu initialisieren. Neu hinzugekommene Büromaschinen können auf diese Weise ohne Zeitverzug in das "Facility Management" bzw. "Fleet Management" einbezogen werden. Es wird hierzu weiterbildend vorgeschlagen, dass die Rundruf- oder/und Such-Funktionalität auf ein Erkennen einer jeweiligen neu-zugeordneten Büromaschine anspricht und einen vorgegebenen Datensatz von internen Daten dieser Büromaschine über das Computernetz ausliest und in einer vorgegebenen Weise verarbeitet oder/und abspeichert. Es werden beispielsweise automatisiert alle für die Wartung bzw. Unterstützung wichtigen Maschinendaten (Maschinentyp, Serien-Nummer, lokale Voreinstellungen, implementierte Ausstattungsoptionen usw.) abgerufen. Das "Facility Management-System" ist damit immer auf aktuellem Stand, und es können neue Büromaschinen automatisch in die Betreuung einbezogen werden.

Es wird noch einmal auf die oben angesprochene Weiterbildungsmöglichkeit Bezug genommen, nach der dem System ein computergestütztes Service-Management- oder/und Unterstützungs- oder/und Bericht-System zugeordnet ist bzw. dieses zu einem entsprechenden Gesamtsystem gehört. Nach diesem Weiterbildungsvorschlag werden Serviceauftragsdaten automatisiert generiert und an das in der Regel einem Techniker zugeordnete zweite Computersystem per Datenkommunikation übermittelt oder/und werden automatisiert Berichtsdaten an das in der Regel stationäre erste Computersystem per Datenkommunikation übermittelt. Es entfällt dann gegenüber dem Stand der Technik der Ausdruck der entsprechenden Daten auf Papier und ggf. die Wiedereingabe dieser Daten in ein anderes Computersystem zur weiteren Verarbeitung. Hierdurch werden Kosten gespart und es ist eine schnellere Reaktion auf Service- oder Wartungsanfragen möglich.

Eine bevorzugte Ausgestaltung des Systems zeichnet sich dadurch aus, dass das erste und das zweite Computersystem dafür ausgelegt sind, in einer Datenkommunikationssitzung automatisiert Serviceauftragsdaten betreffend wenigstens einen neuen Serviceauftrag vom ersten zum zweiten Computersystem und sich auf wenigstens einen erledigten Serviceauftrag beziehende Berichtsdaten vom zweiten zum ersten Computersystem zu übermitteln. Dabei kann vorgesehen sein, dass die Berichtsdaten im Bedarfsfall Folge-Serviceauftragsdaten enthalten, und dass das erste Computersysten dafür ausgelegt ist, auf Grundlage der Folge-Serviceauftragsdaten und ggf. der Stammdaten zu einem späteren Zeitpunkt entsprechende Serviceauftragsdaten automatisiert zu generieren und an das zweite Computersystem oder ein anderes zweites Computersystem per Datenkommunikation zu übermitteln.

In der Regel wird ein Austausch kurzer Datenpakete ausreichen, um einerseits neue Serviceauftragsdaten auf Seiten des zweiten (mobilen) Computersystems zu empfangen und Berichtsdaten, ggf. einschließlich Daten zum Auslösen eines Folge-Serviceeinsatzes, vom zweiten Computersystem zum ersten (in der Regel stationären) Computersystem zu übermitteln. Da dieser Datentausch nach dem Weiterbildungsvorschlag in einer Datenkommunikationssitzung, also quasi gleichzeitig erfolgt, entstehen keine Zeitverzögerungen, und es ist gewährleistet, dass der erledigte Serviceeinsatz ordnungsgemäß auf Seiten des ersten Computersystems verbucht wird, ohne dass Servicetechniker hierdurch belastet wird.

Durch die automatisierte Übersendung von Berichtsdaten an das erste Computersystem wird generell ermöglicht, dass auf Seiten des ersten Computersystems in Bezug auf vorliegende Service- und Wartungsanfragen bzw. -aufträge stets der momentane Status (beispielsweise "einem Techniker zugewiesen", "in Arbeit" und "erledigt") bekannt ist und dass dementsprechend über die verfügbaren personellen und technischen Resourcen ein vollständiger Überblick besteht und diese effizient eingesetzt werden können.

Die Serviceauftragsdaten können Kundendaten, insbesondere Adressdaten, Maschinenstandortdaten, Servicevertragsdaten, Servicegeschichtsdaten und Maschinendaten enthalten. Servicegeschichtsdaten sind beispielsweise Daten, die Informationen über in der Vergangenheit angefallene Störungen (etwa die letzten fünf Störungen) enthalten. Insbesondere können die vorangegangenen Serviceeinsätze aufgelistet und hinsichtlich der aufgetretenen Störung, der durchgeführten Wartungs- bzw. Reparaturarbeiten, eingebauter Ersatzteile, Änderungen der Maschinenkonfiguration usw. spezifiziert sein. Es ist allerdings auch möglich, dass derartige Daten in einer lokalen Datenbasis des zweiten (mobilen) Computersystems vorgehalten werden, so dass vom ersten Computersystem nur Aktualisierungsdaten für die lokale Datenbasis oder/und konkrete Serviceaufträge in Bezug auf einzelne Kunden bzw. Maschinen oder Maschinengruppen an das zweite Computersystem übermittelt werden müssen. Allgemein wird vorgeschlagen, dass das zweite Computersystem Servicedaten in einer Servicedatenbasis hält.

Es wird vorgeschlagen, dass das zweite Computersystem dafür ausgelegt ist, aus den Serviceauftragsdaten automatisiert Daten in einen Berichtsdatensatz zu übernehmen. Dem Techniker wird damit erspart, an sich schon vorbekannte Daten manuell in das zweite Computersystem einzugeben.

Nach einer vorteilhaften Ausführungsform ist vorgesehen, dass das zweite Computersystem eine Datenkommunikationsschnittstelle aufweist, um mit einer Datenkommunikationsschnittstelle einer zugewiesenen Maschine direkt oder indirekt verbunden zu werden, und dass das zweite Computersystem dafür ausgelegt ist, per Datenkommunikation interne Daten der Maschine auszulesen oder/und interne Daten der Maschine zu setzen, wobei vorzugsweise ausgelesene interne Daten per computerinternem Datenaustausch in einen Berichtsdatensatz übernehmbar sind. Diese Daten brauchen dann nicht manuell ausgelesen bzw. eingegeben zu werden. Aus der Maschine ausgelesene interne Daten können vorteilhaft per computersysteminternen Datenaustausch in einen Berichtsdatensatz übernommen werden. Bevorzugt weist das zweite Computersystem eine Funktionalität zum automatisierten Auslesen eines vorgegebenen oder vorgebbaren Satzes von Maschinenzustandsdaten aus einer zugewiesenen Maschine auf. Ferner kann das zweite Computersystem eine Funktionalität zum Ausdrucken ausgelesener interner Daten aufweisen, beispielsweise unter Verwendung eines erst lokal zugeordneten Ausgabegeräts, etwa eines vor Ort vorhandenen Telefaxgerätes.

Es wird vorgeschlagen, dass das zweite Computersystem Ersatzteildaten in einer Ersatzteildatenbasis hält und dass das zweite Computersystem dafür ausgelegt ist, Ersatzteildaten aus der Ersatzteildatenbasis per computersysteminternen Datenaustausch in einen Berichtsdatensatz oder einen gesonderten, ggf. an ein anderes Computersystem als das erste Computersystem per Datenkommunikation zu übermittelnden Bestelldatensatz zu übernehmen. In diesem Zusammenhang können Fehler dadurch zuverlässig vermieden werden, dass das zweite Computersystem dafür ausgelegt ist, beim Zugriff auf die Ersatzteildatenbasis in einem Serviceauftragsdatensatz enthaltende Daten oder/und aus einer zugewiesenen Maschine ausgelesene Daten im Sinne einer Vorauswahl oder/und Kontrolle zu berücksichtigen.

Betreffend die Ersatzteildatenbasis ist es bevorzugt, dass diese eine erste Ersatzteildatenbasis, die sich auf für potentiell zu wartende Maschinen grundsätzlich von einem Ersatzteilversorger verfügbare Ersatzteile bezieht, und eine zweite Ersatzteildatenbasis, die sich auf in einem lokalen Vorrat vorhandene Ersatzteile bezieht, umfasst. Die Ersatzteilbasis bzw. die erste und die zweite Ersatzteildatenbasis kann in Form einer üblichen Datenbank organisiert sein. Es bietet sich an, die erste Ersatzteildatenbasis auf einem auswechselbaren Datenträger mit hoher Kapazität, etwa CD-ROM oder DVD-ROM, bereitzustellen. Bei der zweiten Ersatzteildatenbasis, die sich insbesondere auf in einem Einsatzwagen des Technikers vorhandene Ersatzteile beziehen kann, bietet sich an, diese auf einer lokalen Festplatte des zweiten (mobilen) Computersystems vorzuhalten. Betreffend die erste (allgemeine) Ersatzteildatenbasis sei noch erwähnt, dass es durchaus auch zweckmäßig sein kann, diese nicht lokal vorzuhalten, sondern einen Zugriff auf eine an zentraler Stelle vorgesehene entsprechende Datenbasis (Datenbank) vorzusehen, etwa über das Internet oder allgemein per Datenkommunikation.

Eine besonders bevorzugte Ausgestaltung des Systems bzw. des zweiten Computersystems zeichnet sich dadurch aus, dass das zweite Computersystem dafür ausgelegt ist, auf Grundlage von eingegebenen Ersatzteildaten sowie auf Grundlage von in einem Serviceauftragsdatensatz enthaltenen Daten oder/und aus einer zugewiesenen Maschine ausgelesenen Daten oder/und auf Grundlage von in der Ersatzteildatenbasis enthaltenen Daten automatisiert zu überprüfen, ob ein durch die Ersatzteildaten identifiziertes Ersatzteil in Bezug auf eine zugewiesene Maschine vorgegebenen Zuordnungsbedingungen genügt. Diese Überprüfung kann als Plausibilitätsprüfung ausgelegt sein. Es wird in diesem Zusammenhang beispielsweise an die Möglichkeit gedacht, dass der Techniker aufgrund seiner Erfahrung zu einem Ersatzteil aus seinem Vorrat (insbesondere Ersatzteilvorrat im Einsatzfahrzeug) greift. In der Regel wird er das richtige Ersatzteil erwischen. Es ist aber durchaus denkbar, dass er im Einzelfall zum falschen Ersatzteil greift, dass also ein anderes Ersatzteil richtig oder zumindest besser wäre. Durch den Weiterbildungsvorschlag kann gewährleistet werden, dass der Techniker erforderlichenfalls auf ein anderes Ersatzteil verwiesen wird. Hierzu wird speziell vorgeschlagen, dass das zweite Computersystem ferner dafür ausgelegt ist, auf Grundlage der vorgegebenen Zuordnungsbedingungen sowie ggf. auf Grundlage von sich auf die zugewiesene Maschine beziehenden Upgradedaten (auch als Aktualisierungs- oder Updatedaten bezeichenbar) über eine Benutzerschnittstelle Hinweise auf ein anderes Ersatzteil zu geben. Man kann beispielsweise vorsehen, dass geeignete oder empfehlenswerte Ersatzteile bzw. "Upgradeteile" dem Techniker auf den Bildschirm des zweiten Computers zur Auswahl angeboten werden.

Ein wichtiger Aspekt in diesem Zusammenhang ist, dass es eventuell einem neueren Änderungsstand (Änderungslevel) der Maschinenkonstruktion entsprechende Ersatzteile geben könnte, die es ermöglichen, schon ausgelieferte Maschinen auf den neueren Änderungsstand zu bringen. Die Überprüfung und ggf. Hinweisgebung gemäß dem Weiterbildungsvorschlag ermöglicht auf Grundlage der Upgradedaten, den Techniker auf die bestehende Upgrademöglichkeit hinzuweisen. In diesem Zusammenhang können dem Techniker Angaben zur Kompatibilität zwischen Ersatzteilen einerseits und der zugewiesenen Maschine andererseits gegeben werden. Die Upgradedaten können in der Ersatzteildatenbasis mit enthalten sein.

Um die beispielsweise sich auf ein konkretes Ersatzteil beziehenden Ersatzteildaten ohne Aufwand in das zweite Computersystem eingeben zu können, wird vorgeschlagen, dass dem zweiten Computersystem eine Einlesevorrichtung zum automatisierten Einlesen von einem jeweiligen Ersatzteil zugeordneten Ersatzteildaten zugeordnet ist. Die Einlesevorrichtung kann vorteilhaft als optische oder radiofrequenzbasierte Einlesevorrichtung ausgebildet sein. Als optische Einlesevorrichtung bietet sich als besonders zweckmäßig ein Barcodeleser an.

Zur angesprochenen Überprüfung auf Grundlage der Zuordnungsbedingungen sei noch erwähnt, dass die Überprüfung in der Regel sehr zweckmäßig auf Grundlage der (aus der zugewiesenen Maschine ausgelesenen oder/und mit den Serviceauftragsdaten erhaltenen) Seriennummer der jeweiligen Maschine erfolgen kann, die in der Regel den Änderungszustand der Maschine gemäß Serienfertigung identifiziert. Schon erfolgte Updates oder Upgrades auf neuere Änderungsstände können in in der Maschine lokal vorgehaltenen Änderungsdaten oder/und in auf dem zweiten Computersystem vorgehaltenen, ggf. mit den Serviceauftragsdaten empfangenen Änderungsdaten angegeben sein.

Ferner wird vorgeschlagen, dass das zweite Computersystem dafür ausgelegt ist, auf Grundlage von Ersatzteildaten oder/und Ersatzteilvorratsdaten oder/und manuell oder per Datenkommunkation eingegebenen bzw. aus der Maschine ausgelesenen Maschinendaten, die vorzugsweise Diagnosedaten umfassen, automatisiert Bestelldaten und ggf. Folge-Serviceauftragsdaten zu generieren und in einen Berichtsdatensatz oder einen gesonderten, ggf. an ein anderes Computersystem als das erste Computersystem per Datenkommunikation zu übermittelnden Bestelldatensatz zu übernehmen. Fehler bei der Bestellung von Ersatzteilen werden hierdurch vermieden und es kann ohne großen Aufwand dafür gesorgt werden, dass aus einem Wagenbestand des Technikers entnommene Ersatzteile nachbestellt bzw. zum Auffüllen des Wagenbestands bereitgestellt werden.

In der Regel wird es zweckmäßig sein, wenn das zweite Computersystem die manuelle Eingabe von Daten zur Übernahme in einen Berichtsdatensatz ermöglicht. Hierzu wird weiterbildend vorgeschlagen, dass eine besonders relevante Daten zwingend abfragende Benutzerschnittstelle vorgesehen ist.

Wichtige servicerelevante Daten sind insbesondere: Fahrzeit des Technikers zum Kunden, benötigte Arbeitszeit, eingebaute Ersatzteile, Zählerstände, usw. Zumindest ein Teil dieser Daten, ggf. sogar alle diese Daten, können computerunterstützt und automatisiert erfasst und in den Berichtsdatensatz übernommen werden.

In den Berichtsdatensatz werden bevorzugt vor allem auch Angaben dahingehend aufgenommen, wann der nächste Service in Bezug auf die jeweilige Maschine erfolgen sollte. Dies ermöglicht einerseits eine Vorankündigung beim Kunden und anderseits eine rechtzeitige Planung auf Seiten des Serviceproviders. Selbst wenn die Wartung normalerweise vorgegebenen Wartungsintervallen folgt, ist eine Ankündigung beim Kunden in der Regel zweckmäßig. Eine Ankündigung und entsprechende Planung auf Seiten des Serviceproviders ist auf jeden Fall dann nötig, wenn zusätzliche Serviceeinsätze neben dem Service gemäß den vorgegebenen Wartungsintervallen erforderlich sind, etwa Folge-Wartungseinsätze auf den gerade durchgeführten Wartungseinsatz.

In der Regel wird es sinnvoll und vom Kunden gewünscht sein, wenn diesem ein ausgedruckter Servicebericht übergeben wird. Ferner ist es in der Regel sinnvoll, einen Servicebericht aus Sicherheitsgründen zum Nachweis auszudrucken, im Hinblick darauf, dass es zu Datenverlusten kommen kann. In diesem Zusammenhang wird vorgeschlagen, dass das zweite Computersystem dafür ausgelegt ist, per Daten- oder Telekommunikation, vorzugsweise per drahtloser Daten- oder Telekommunikation, einen Servicebericht vermittels eines durch Anschluss- oder Adressdaten identifizierten Ausgabegeräts auszudrucken. Damit es nicht erforderlich ist, dass in Bezug auf das zweite Computersystem ein eigener Drucker vorgehalten wird, kann man daran denken, ein beim Kunden ohnehin vorhandenes Ausgabegerät zu nutzen. In diesem Zusammenhang wird vor allem daran gedacht, dass das Ausgabegerät ein an einem öffentlichen Daten- oder Telekommunikationsnetz angeschlossenes Telefaxgerät ist.

Das zweite Computersystem kann weitere Unterstützungsfunktionalitäten zur Unterstützung des Technikers aufweisen, die vorzugsweise mit den vorstehend angesprochenen Funktionalitäten in eine Anwendung integriert sind. Es wird beispielsweise an eine Notizblockfunktionalität gedacht, wobei eine Übernahme der Notizen in die Berichtsdaten vorgesehen sein kann.

Die Erfindung betrifft ferner ein Verfahren zur Betreuung oder/und zur Fernwartung oder/und zum Management einer Mehrzahl von Büromaschinen oder/und zur Bereitstellung von sich auf wenigstens eine der Büromaschinen beziehender Information. Erfindungsgemäß ist ein Auslesen von internen Daten wenigstens einer der Büromaschinen oder/und ein Setzen von internen Daten wenigstens einer der Büromaschinen per drahtloser Datenkommunikation oder/und per Datenkommunikation über ein Computernetz oder/und per Datenkommunikation über eine Modemverbindung vorgesehen, unter Verwendung eines erfindungsgemäßen Systems wie in den Ansprüchen definiert.

Die vorliegende Erfindung wird anhand der beigefügten Zeichnung näher erläutert.
- Fig. 1: zeigt ein Ausführungsbeispiel eines erfindungsgemäßen Systems, umfassend eine Mehrzahl von Kopierern oder/und anderen Bürogeräten, die über einen jeweiligen WEB-Server und ein LAN am Internet und damit an einer zugeordneten Service-Computereinheit angeschlossen oder anschließbar sind.
- Fig. 2: zeigt ein weiteres Ausführungsbeispiel eines erfindungsgemäßen Systems umfassend eine zugeordnete Service-Computereinheit, die über ein LAN/WAN an den Büromaschinen angeschlossen ist, und eine weitere, ggf. ebenfalls als Service-Computereinheit identifizierbare Computereinheit, die über das Internet mit der erstgenannten Service-Computereinheit oder/und mit den Bürogeräten in Datenkommunikationsverbindung steht oder bringbar ist.
- Fig. 3: zeigt eine Konfiguration des Systems der Fig. 2 mit einer Büromaschinenflotte, die mehrere räumlich verteilte Gruppen von Büromaschinen umfasst.
- Fig. 4: zeigt ein Beispiel, wie mehrere Systeme der in den Fig. 2 bzw. 3 gezeigten Art in ein Gesamtsystem mit wenigstens einer übergeordneten Computereinheit einbezogen sein können.
- Fig. 5: zeigt ein computergestütztes Service-Management- und Unterstützungs- und Berichts-System in Zuordnung zu einem Kundengerät und einem Hostsystem, das in Kombination mit oder als Teil eines erfindungsgemäßen Systems vorteilhaft einsetzbar ist.
- Fig. 6: zeigt eine Struktur des Systems der Fig. 5 in Bezug auf bereit-gehaltene Daten und Datenflüsse.

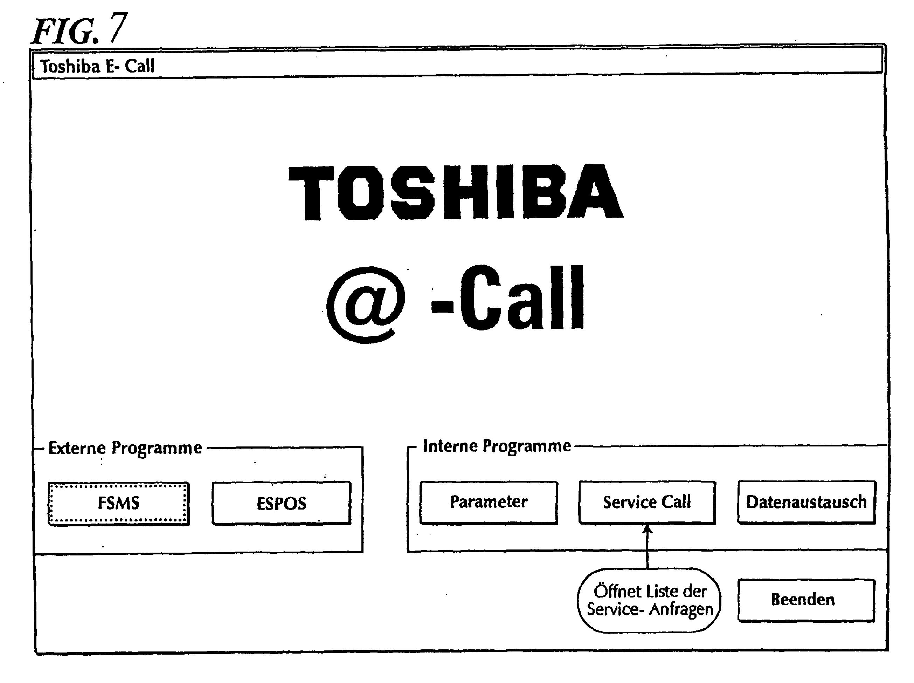

- Fig. 7: zeigt beispielhaft einen Bildschirm einer Benutzerschnittstelle eines einem Techniker zugeordneten Computersystems, das Teil eines Systems der in Fig. 5 und 6 gezeigten Art ist.

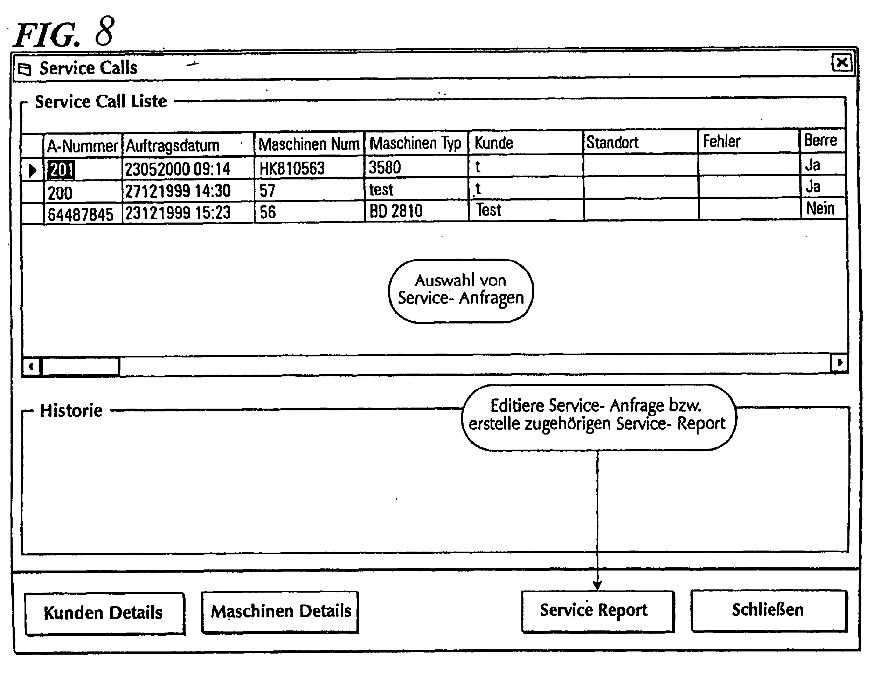

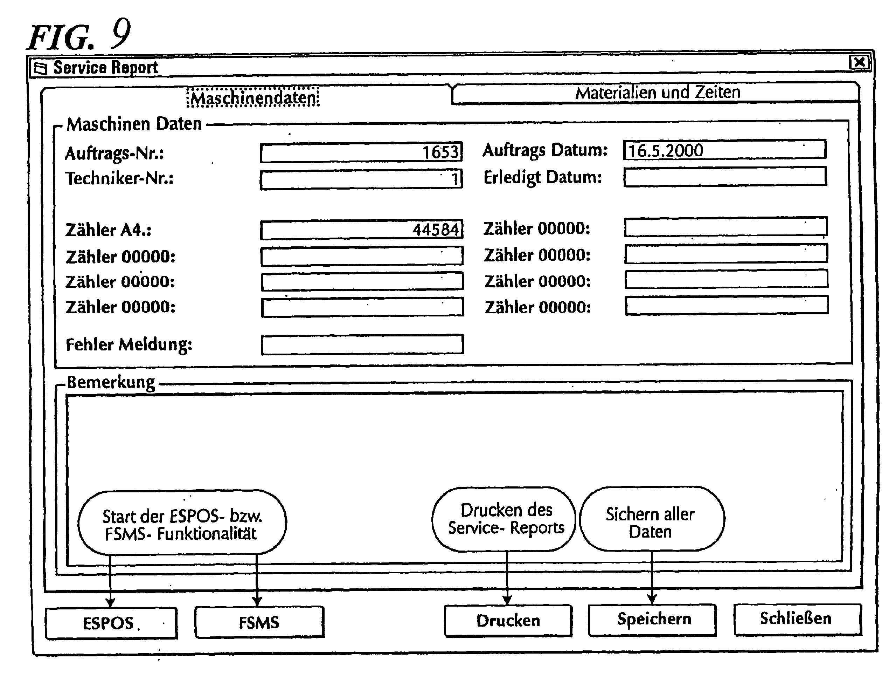

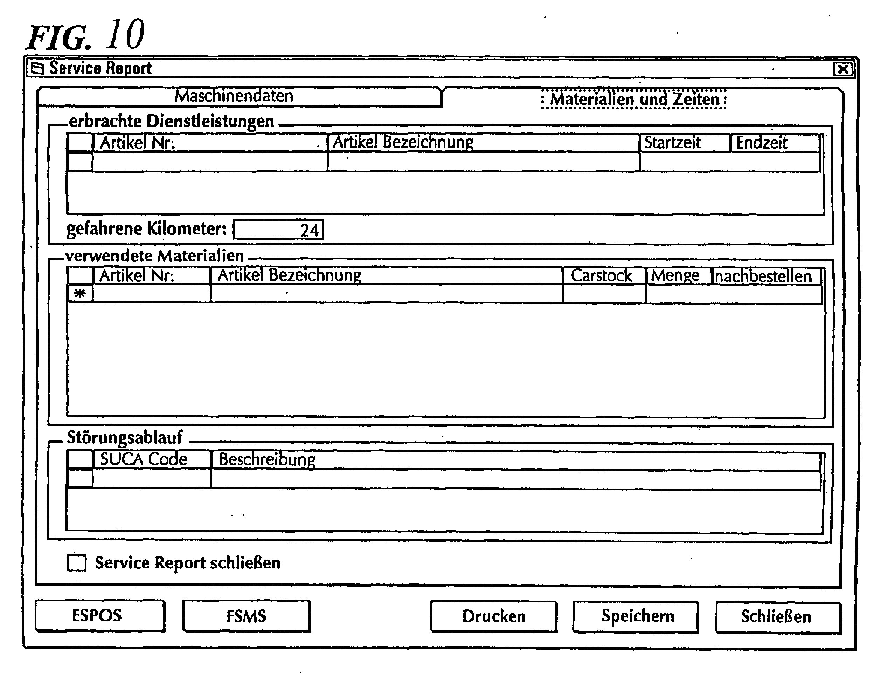

- Fig. 8-10: zeigen weitere Bildschirme der Benutzerschnittstelle.
- Fig. 11: ist ein schematisches Blockschaltbild eines Ausführungsbeispiels einer als Interface-Computereinheit (oder ggf. auch als "Interface-Konverter") bezeichenbaren Computereinheit, die eine Fernwartung einer zugeordneten Büromaschine per Datenkommunikation ermöglicht.
- Fig. 12: zeigt Datenflussdiagramme, die von der Computereinheit der Fig. 11 bereitgestellte Datenflusspfade darstellen.
- Fig. 13: ist ein schematisches Blockschaltbild eines Ausführungsbeispiels einer Büromaschine (beispielsweise eines Kopierers), die unter Vermittlung der Interface-Computereinheit der Fig. 11 oder unabhängig hiervon fernwartbar ist.

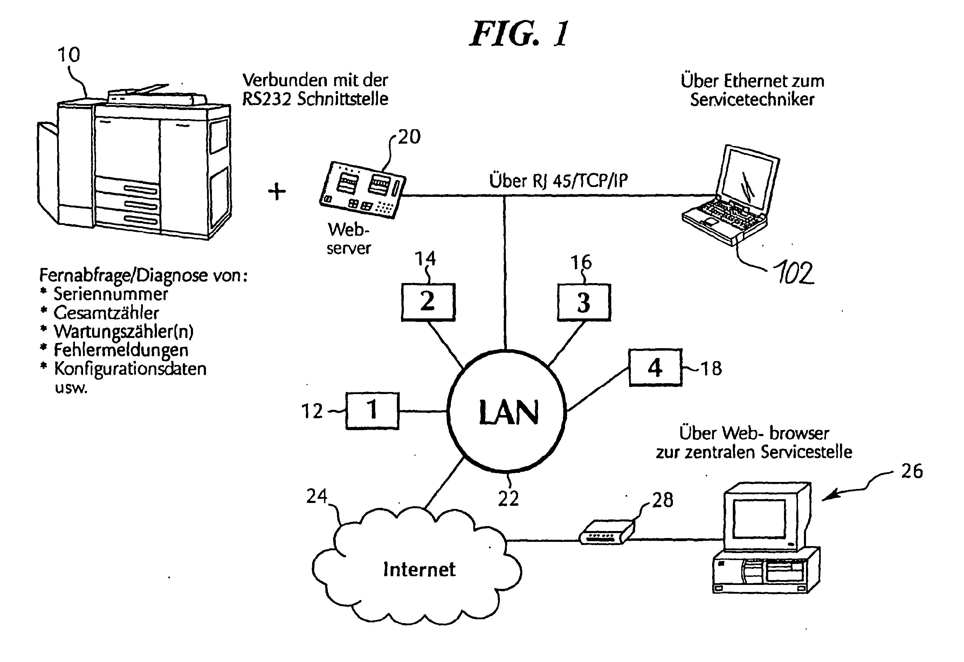

Die Fig. 1 zeigt ein Beispiel eines erfindungsgemäßen Systems mit einem Kopierer 10 und mehreren weiteren, durch Blöcke 1, 2, 3 und 4 repräsentierten Büromaschinen 12, 14, 16 und 18, die jeweils über eine als WEB-Server dienende oder konfigurierbare Computereinheit (Computereinheit 20 im Falle des Kopierers 10) an einem LAN 22 angeschlossen oder anschließbar sind, das wiederum am Internet 24 angeschlossen oder anschließbar ist. Bei den Büromaschinen 12 bis 18 kann es sich um Büromaschinen anderen Typs als die Büromaschine 10 handeln, beispielsweise um Drucker, Telefaxgeräte, Scanner oder auch um sogenannte Mehrfunktionsgeräte, die mehrere Funktionalitäten, etwa wenigstens zwei der folgenden Funktionalitäten "Kopierer", "Drucker", "Scanner" und "Telefaxgerät" aufweisen.

Den Büromaschinen 10 bis 18 ist ein Service-Computersystem 26 zugeordnet, das über ein Modem 28 oder dergleichen am Internet 24 angeschlossen oder anschließbar ist. Von dem beispielsweise zu einer zentralen Servicestelle gehörigen Service-Computersystem 26 kann, beispielsweise mittels eines WEB-Browsers, eine Fernwartung in Bezug auf die zugeordneten Büromaschinen bzw. Bürogeräte durchgeführt werden. Beispielsweise können interne Gerätedaten, wie Seriennummern, Zählerstände (Gesamtzähler, ein oder mehrere Wartungszähler), Fehlermeldungen oder Fehlercodes, Konfigurationsdaten usw. per Datenkommunikation über das Internet ausgelesen werden. Es wird im Zusammenhang mit Kopierern oder dergleichen insbesondere an folgende Daten gedacht: Maschinen-Seriennummer, Totalzähler, Konfiguationsdaten, Fehlermeldungen (ggf. mit detaillierter Beschreibung), Zählerstände von Baugruppen (etwa Heiz- oder Fuser- bzw. Fixierer-Einheit) oder Bauteilen (z. B. Trommel, Heizwalzen, Einzugswellen usw.). Beispielsweise können auf diese Weise die Anzahl von bisher bzw. innerhalb eines Zeitraums angefallenen Drucken, Kopien, Telefaxe, bzs. Scans abgefragt werden. Ferner können per Datenkommunikation über das Internet interne Daten der Büromaschinen gesetzt werden. Es wird insbesondere auch daran gedacht, das jeweilige Gerät per "Fernwartung" über das Internet zu konfigurieren und Betriebssoftware des jeweiligen Geräts (sogenannte Firmware) zu aktualisieren. Ferner können auch Zähler zurückgesetzt werden. Vermittels des "Fernservice" über das Internet können auch Abrechnungsdaten (insbesondere Zählerstände) aus den Büromaschinen ausgelesen werden, um nutzungsabhängige Entgelte (etwa Leasing- oder Mietkosten) abrechnen zu können.

Es kann vorgesehen sein, dass das Auslesen bzw. Setzen von geräteinternen Daten alternativ auch "lokal" an der Büromaschine selbst bzw. über das LAN oder ein Ethernet erfolgen kann, etwa durch einen Servicetechniker mittels eines tragbaren Computers 102 oder dergleichen.

Nach dem Erfindungsvorschlag ist insbesondere eine sogenannte "vorbeugende Wartung" der dem Service-Computersystem 26 zugeordneten Büromaschinen möglich. Im Falle eines Kopierers/Druckers/Faxgeräts kann beispielsweise eine Wartung in Bezug auf eine jeweilige elektrofotographische Prozesseinheit, eine Heizeinheit (sogenannte Fuser), ein Transport- und Ladungsbild-Übertragungsband oder eine Ladungs-Übertragungstrommel durchgeführt werden. Grundsätzlich können alle Wartungs- und Diagnosearbeiten per Datenkommunikation über das Internet durchgeführt werden, die keinen Austausch von Komponenten (Verschleiß- bzw. Verbrauchskomponenten) und keinen sonstigen manuellen Eingriff an der jeweiligen Büromaschine erfordern. Erforderlich werdende Serviceeinsätze vor Ort lassen sich nach dem Erfindungsvorschlag besser vorbereiten.

Aus einer jeweiligen Büromaschine lassen sich mittels der in die Büromaschine integrierten oder an dieser angeschlossenen Computereinheit (Computereinheit 20 im Falle des Kopierers 10) vorzugsweise sowohl Servicerelevante Daten (insbesondere Zählerstände, Fehlerzustände, usw.) als auch Benutzer-relevante Daten (wie beispielsweise Papiervorrat alle, Tonervorrat alle, Papiervorrat unter Schwellenwert abgefallen, Tonervorrat unter Schwellenwert abgefallen, usw.) von dem zugeordneten Service-Computersystem 26 abrufen. Es ist nicht zwingend, dass dieses Service-Computersystem über das Internet auf die maschineninternen Daten bzw. die im Ausführungsbeispiel als WEB-Server arbeitende Computereinheit zugreift. Es kann beispielsweise vorgesehen sein, dass das Service-Computersystem 26 ebenfalls am LAN 22 (oder - gemeinsam mit dem bzw. den als WEB-Server dienenden Computereinheiten - an einem WAN, Intranet oder dergleichen) angeschlossen ist. Es wird beispielsweise daran gedacht, dass das Service-Computersystem 26 zugehörig ist zu einer die angeschlossenen Büromaschinen betreuenden Stelle etwa einer Firma oder Organisation, die die angeschlossenen, in der Regel räumlich verteilten Büromaschinen im normalen Betriebsablauf nutzt. Auf diese Weise kann beispielsweise dafür gesorgt werden, dass Kopierer immer rechtzeitig mit Toner und Papier versorgt werden, so dass aus Papiermangel oder Tonermangel keine Ausfallzeiten entstehen. Entsprechendes gilt für andersartige Büromaschinen. Auf diese Weise kann auch ohne Einschaltung eines externen Service auf behebbare Fehlerzustände, wie beispielsweise Papierstau, schnell reagiert werden.

Ein derartiges (internes) Service-Computersystem 26 ist nach der Erfindung dafür vorgesehen, weitere, im Rahmen eines Flotten- bzw. Facility-Managements benötigte Funktionen erfüllen, wie beispielsweise Verbrauchsauswertungen, Benutzer-Statistiken, Kostenauswertungen (etwa bezogen auf Kostenstellen, Anzahl gemachter Kopien, Drucke, Faxe, Scans, usw.), Ausfallstatistiken, Statistiken über-Fehlermeldungen, Ermittlung mittlerer Ausfallzeiten usw. Ferner ist nach der Erfindung vorgesehen, daß eine Fernwartung im oben erläuterten Sinne durch die interne oder/und eine externe Stelle mittels eines entsprechenden Service-Computersystems erfolgen kann, die beispielsweise über das Internet auf die den Büromaschinen zugeordneten Computereinheiten direkt zugreift (vgl. Konfiguration der Fig. 1) oder unter Vermittlung des "internen Service-Computersystems" auf die den Büromaschinen zugeordneten Computereinheiten und damit auf die internen Daten der jeweiligen Büromaschine zugreift.

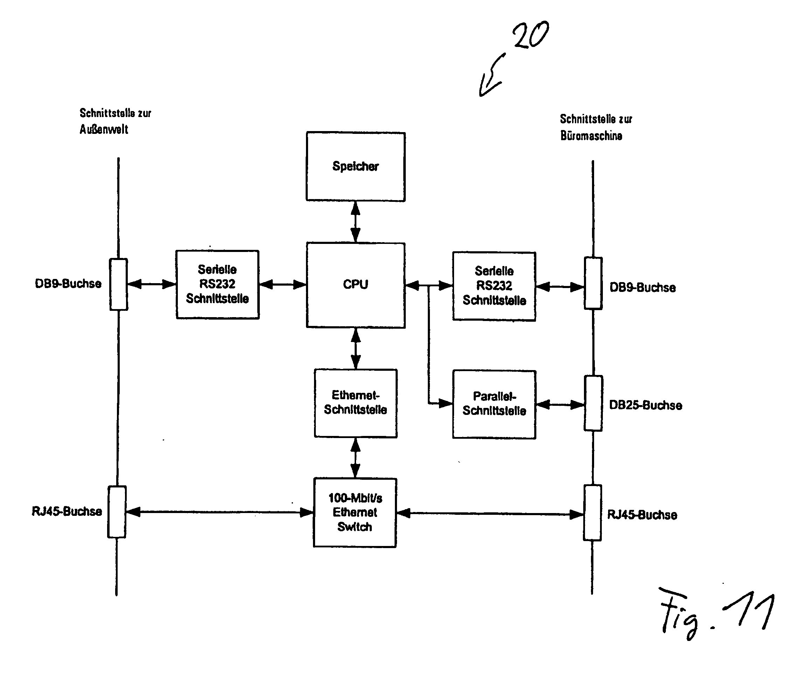

Hinsichtlich dem Aufbau und der Auslegung der die Fernwartung ermöglichenden Computereinheit 20 bestehen grundsätzlich viele Möglichkeiten. Fig. 11 zeigt schematisch ein Beispiel einer derartigen "Interface-Computereinheit", die sich durch vielfältige Anschlussmöglichkeiten auszeichnet. Es ist eine Schnittstelle zur zugeordneten Büromaschine vorgesehen, die drei wahlweise verwendbare Schnittstellen, nämlich eine serielle Schnittstelle, eine parallele Schnittstelle und eine Ethernet-Schnittstelle, zum Anschluss der zugeordneten Büromaschine aufweist. Je nach Schnittstellenausstattung der Büromaschine kann eine oder können mehrere der genannten Anschlussmöglichkeiten verwendet werden.

Die Computereinheit 20 ist ferner mit einer Schnittstelle zur Außenwelt ausgerüstet. Zum Anschluss am Computernetz wird bevorzugt eine Ethernet-Schnittstelle verwendet. Zusätzlich ist auch eine serielle Schnittstelle vorhanden, die beispielsweise mittels eines Modems eine Kommunikation mit einer Modem-Gegenstelle oder eine direkte Einwahl ins Internet ermöglicht.

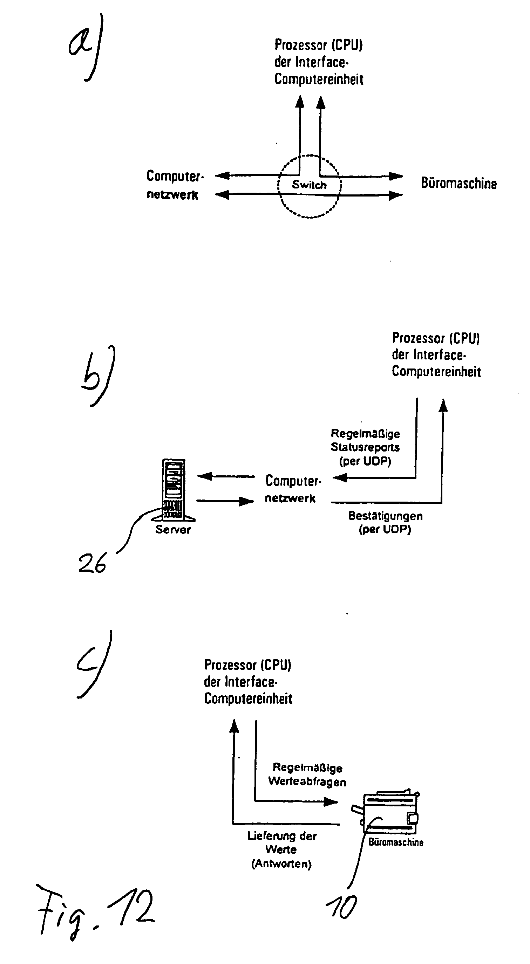

Die beiden erwähnten Ethernet-Schnittstellen werden durch einen Ethernet-Switch bereitgestellt, der omni-direktionale Netzwerkkommunikation zwischen dem Computernetz, einem Prozessor der Computereinheit und der Büromaschine ermöglicht, ohne dass ein externer Switch oder Hub erforderlich ist. Es wird auf Fig. 12a verwiesen. Soweit von der Büromaschine unterstützt, ist aus dem Computernetz ein direkter Zugriff auf interne Daten der Büromaschine möglich.

Die Computereinheit kann ferner noch weitere Schnittstellen aufweisen, beispielsweise auch eine Schnittstelle für drahtlose Datenkommunikation. Es wird beispielsweise an eine Bluetooth-Schnittstelle gedacht, die es etwa einem Servicetechniker erleichtert, auf interne Daten der Computereinheit bzw. - unter Vermittlung der Computereinheit - auf interne Daten der an der Computereinheit angeschlossenen Büromaschine zuzugreifen. Auch die Fernwartung oder/und eine Fernüberwachung der Büromaschine kann gewünschtenfalls per drahtloser Datenkommunikation erfolgen.

Die Interface-Computereinheit ist mit Betriebssoftware ausgestattet, die ein Netzwerk-Betriebssystem umfasst, welches die Kommunikation über die verschiedenen Schnittstellen einschließlich aller vorgesehenen Protokolle ermöglicht. Es seien als Beispiele die Netzwerkstandards ARP, IP, UDP, TCP, HTTP genannt, sowie ferner PPP und FTP für den Modembetrieb und den Datentransfer (Dateitransfer). Zu erwähnen in diesem Zusammenhang sind ferner auch Protokolle für die drahtlose Datenkommunikation, etwa Bluetooth. Da in der Regel nur eine Auswahl der Schnittstellen konkret eingesetzt werden wird, können die Schnittstellen unabhängig voneinander aktiviert oder deaktiviert werden.

Auch der Betriebssoftware setzt verschiedene Funktionalitäten bereitstellende Anwendungssoftware auf. So sind Funktionalitäten zum Ermitteln des Büromaschinentyps und zur Kommunikation mit der jeweiligen Büromaschine über eine der genannten Schnittstellen vorhanden. Eine bevorzugte Auslegung sieht vor, dass zyklisch interne Daten der Büromaschine (beispielsweise ein Kopierer) abgefragt werden. Es kann beispielsweise das TOSHIBA-FSMS-Protokoll für die Kommunikation über die serielle oder parallele Schnittstelle verwendet werden, oder das HTTP-Protokoll, sofern die Büromaschine eine entsprechende HTTP-Server-Schnittstelle (über Ethernet und TCP/IP) besitzt. Der Datenfluss zwischen einem Prozessor (CPU) der Interface-Computereinheit und der Büromaschine ist in Fig. 12c dargestellt. Die abgefragten Daten umfassen beispielsweise Informationen über Zählerstände, Fehlerzustände, Abnutzung von Verschleißteilen und Ausstattung der Büromaschine. Der normale Betrieb der Büromaschine wird durch die Abfragen nicht beeinflusst. Die Anwendungssoftware ist dafür ausgelegt, Unterbrechungen in der Kommunikation zu detektieren und die Kommunikation automatisch (nach einer Wartezeit) wieder aufzunehmen.

Die abgefragten internen Daten der Büromaschine werden in einem Speicher der Computereinheit zwischengespeichert und stehen dort für Abfragen aus dem Computernetz zur Verfügung. Eine bevorzugte Ausgestaltung sieht vor, dass zyklisch Berichtsdatensätze an eine zugeordnete Datenkommunikationsadresse gesendet werden (vgl. Fig. 12b). Es kann sich um so genannte Δ-Berichte (Delta-Berichte) handeln, die nur solche Daten enthalten, die sich nach einem vorangehenden Bericht verändert haben. Die Übertragung kann zweckmäßig unter Verwendung des UDP-Protokolls erfolgen.

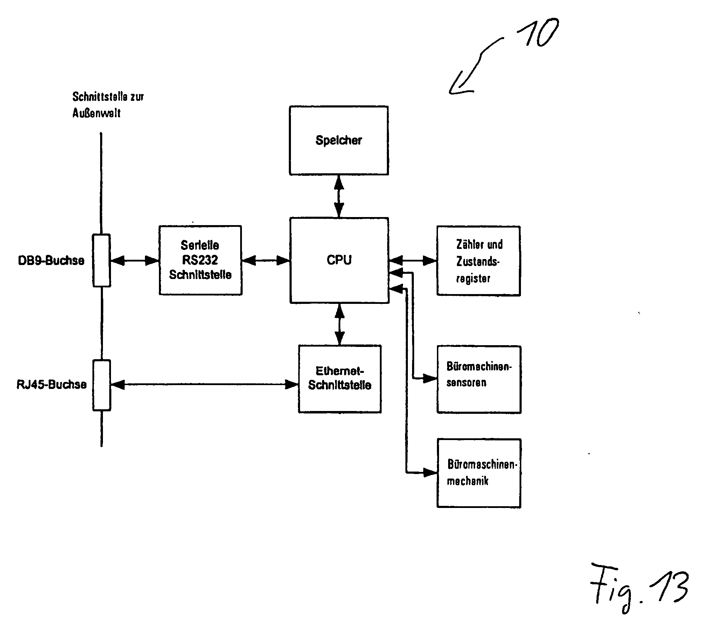

Fig. 13 veranschaulicht den Aufbau einer Büromaschine, soweit hier von Interesse. Bei der Büromaschine kann es sich beispielsweise um einen Kopierer handeln. Die Büromaschine empfängt über ihre Schnittstelle zur Außenwelt, beispielsweise eine serielle Schnittstelle oder eine Ethernet-Schnittstelle, die Werteabfragen von der zugeordneten Interface-Computereinheit. Auf diese Abfragen hin liest ein Prozessor der Büromaschine die entsprechenden Daten aus dem internen Speicher bzw. aus internen Registern und Zählern aus und sendet diese Informationen über die Schnittstelle zur Interface-Computereinheit. Es sind bevorzugt fehlertolerante Handshake-Prozeduren implementiert, die für einen sicheren Datenaustausch zwischen der Büromaschine und der Interface-Computereinheit sorgen.

Eine andere Möglichkeit der Ausgestaltung des Zugriffs auf die internen Daten der Büromaschine sieht vor, dass die Interface-Computereinheit direkt auf die internen Daten der Büromaschine zugreifen kann.

Eine weitere Möglichkeit ist, dass die Funktionen der Interface-Computereinheit durch die Steuereinheit der Büromaschine selbst mit übernommen werden. Es bedarf dann nur eines Anschlusses der Büromaschine an dem Computernetz, um die beschriebenen Fernwartungsfunktionen ausführen zu können.

Zu erwähnen ist, dass Fig. 13 nur ein Beispiel angibt, und dass auch anders aufgebaute und ggf. andere Schnittstellen aufweisende Büromaschinen durch büromaschineninterne Funktionalitäten oder/und mittels einer entsprechend ausgebildeten Interface-Computereinheit in eine über das Computernetz erfolgende Fernwartung einbezogen werden können.

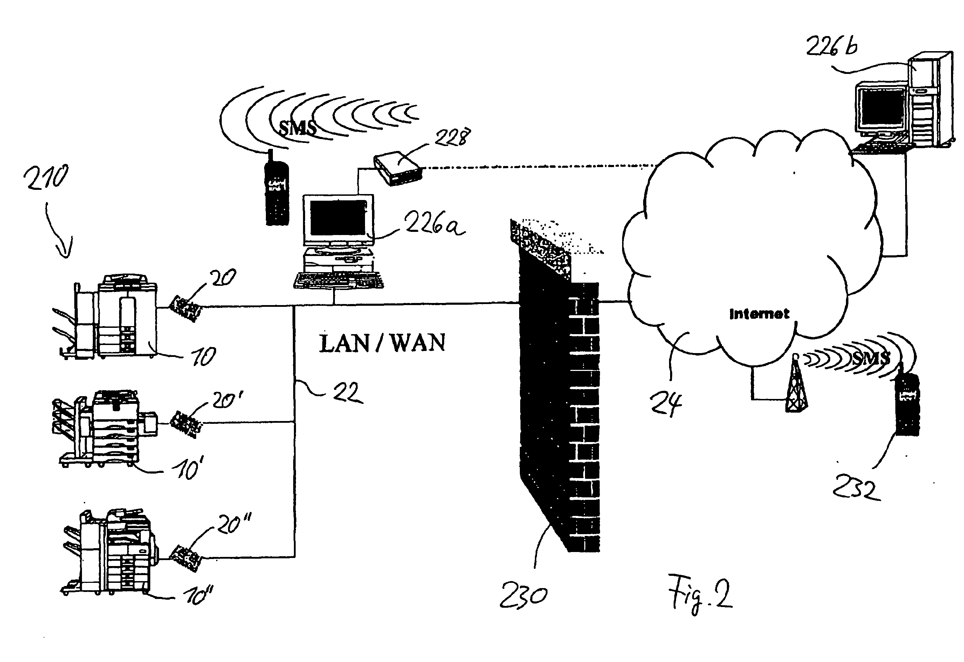

Fig. 2 zeigt ein erfindungsgemäßes System, bei dem ein "internes" Service-Computersystem 226a über ein LAN/WAN 22 auf die Computereinheiten 20, 20' und 20" einer Gruppe 210 von Büromaschinen 10, 10', 10" und damit auf die internen Daten dieser Büromaschinen lesend oder/und schreibend zugreifen kann. Ferner ist ein externes Service-Computersystem 226b vorgesehen, das, soweit durch eine Firewall 230 zugelassen, über das Internet 24 mit dem erstgenannten Service-Computersystem 226a und, entweder direkt ohne Einschaltung des Service-Computersystems 126a oder indirekt, nämlich unter Vermittlung dieses Service-Computersystems 226a, lesend oder/und schreibend vermittels der jeweiligen Büromaschinen-Computereinheit auf die internen Daten der angeschlossenen Büromaschinen zugreifen kann.

Sicherheitshalber kann aber auch vorgesehen sein, dass die lesenden und schreibenden Zugriffe auf die internen Daten nur vom Service-Computersystem 226a her möglich sind, oder nur dann, wenn vom Service-Computersystem 226a her ein Kommunikationskanal über die Firewall 230 zum Service-Computersystem 226b bzw. zur jeweiligen Büromaschinen-Computereinheit 20, 20' bzw. 20" offengehalten wird.

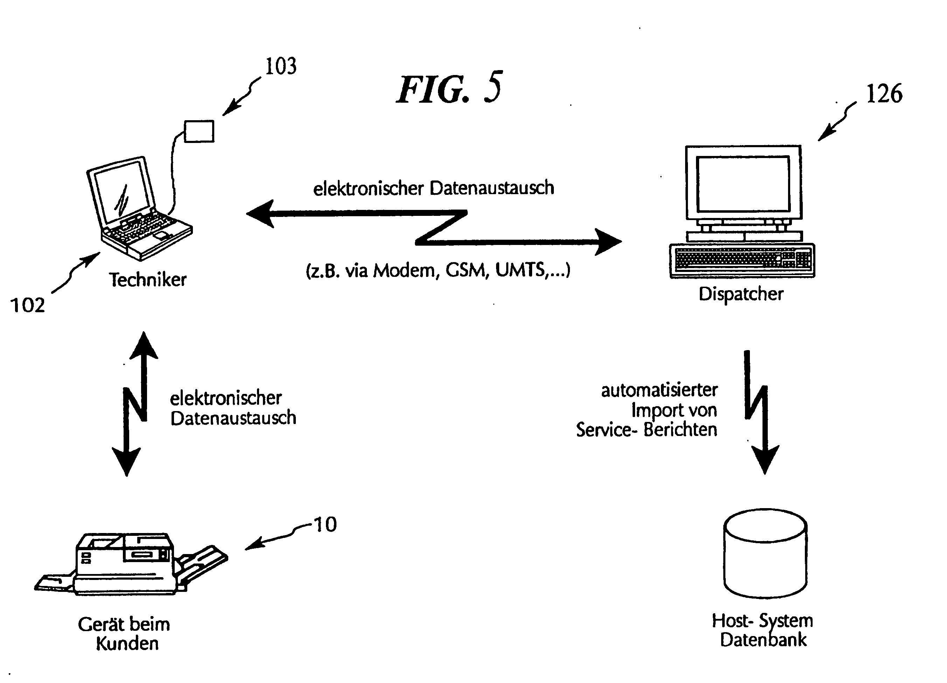

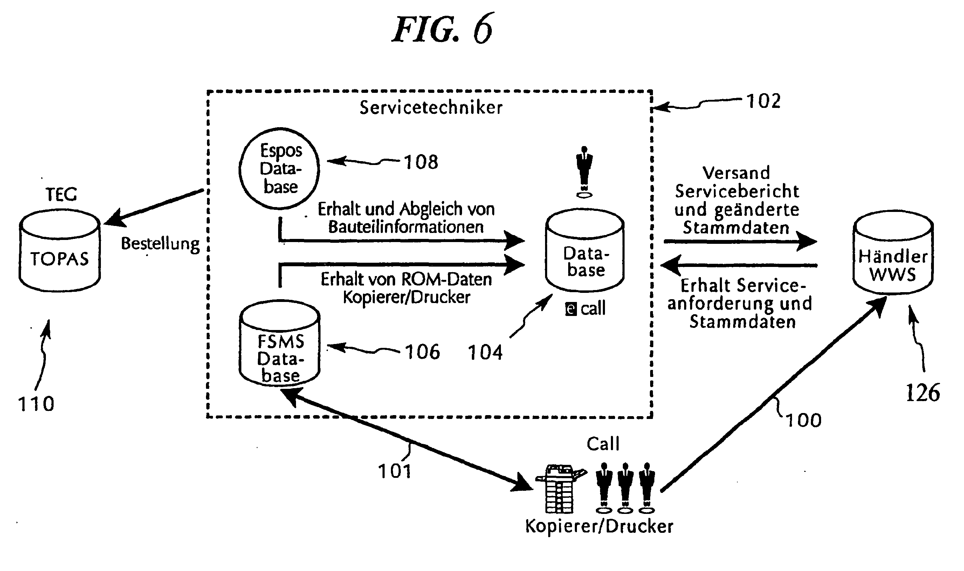

Das Service-Computersystem 226b kann zusätzlich oder alternativ auch noch weitere Funktionen erfüllen, insbesondere auch die Funktion, Service- und Wartungseinsätze zu unterstützen bzw. entsprechende Wartungsaufträge konkret an Techniker zu erteilen. Das Service-Computersystem 226b kann hierbei die Rolle des Dispatcher-Systems 126 des in den Fig. 5 und 6 gezeigten Systems übernehmen, das auf Service-Anfragen vom internen Service-Computersystem 226a anspricht. So kann es sein, dass das interne Service-Computersystem 226a aufgrund seiner Fernüberwachung der angeschlossenen Büromaschinen feststellt, dass Wartungs- bzw. Service-bedarf besteht, und dass diesbezüglich eine externe Service-Organisation einzuschalten ist. Hierzu kann das interne Service-Computersystem 226a in Realisierung eines Erfindungsvorschlags automatisch oder automatisiert per E-Mail oder sonstige Datenkommunikation über die Firewall 230 und das Internet 24 dem externen Service-Computersystem 226b entsprechende Anfragedaten (Anfragedaten betreffend eine oder mehrere Service- oder Wartungsanfragen) bzw. Auftragsdaten übermitteln. Es kann alternativ oder zusätzlich auch ein anderer Kommunikationsweg, nämlich beispielsweise über ein Modem 228 ins Internet und damit zum externen Service-Computersystem 226b benutzt werden, um besonders hohen Sicherheitsanforderungen gegen unberechtigte Zugriffe von außen auf das interne Computernetz gerecht zu werden.

Vom externen Service-Computersystem 226b können dann entsprechende Wartungs- und Serviceaufträge an zugeordnete Techniker per Daten- bzw. Telekommunikation erteilt werden, beispielsweise an ein Mobiltelefon 232, beispielsweise per SMS oder auch per akustischer Nachricht oder per E-Mail an einen mobilen Computer des jeweiligen Technikers und dergleichen. Es wird insbesondere auch an eine Datenkommunikation und Datenübermittlung gedacht, wie unten im Zusammenhang mit Fig. 5 und 6 beschrieben.

Es ist durchaus auch möglich, dass auch das interne Service-Computersystem entsprechende Service- bzw. Wartungsaufträge direkt an zugeordnete Techniker gibt, wobei es sich beispielsweise um einen Haustechniker der Firma bzw. Organisation handeln kann, zu der der interne Service-Computer 226a gehört, oder auch um externe Techniker, die von einer externen Service-Organisation für entsprechende Einsätze zur Verfügung gestellt sind. Die Benachrichtigung des jeweiligen Technikers kann ebenfalls per Datenkommunikation oder Telekommunikation an ein entsprechendes Endgerät des Technikers (Mobiltelefon, tragbarer Computer, Handhalt-Computer, Funkrufempfänger und dergleichen) erfolgen, wobei insbesondere an Versendung von E-Mails, SMS-Benachrichtigungen und akustische Benachrichtigungen gedacht wird.

Man kann vorteilhaft vorsehen, dass das interne Service-Computersystem 226a auftretende Fehlerzustände und auftretenden Service-Bedarf anhand vorgegebenen Kriterien beurteilt und dann in Abhängigkeit von dieser Beurteilung einen von mehreren zur Verfügung stehenden Kommunikationskanälen wählt, also beispielsweise für leichtere Störungen und einfachen Service-Bedarf einen "internen" Techniker beauftragt bzw. benachrichtigt, und für schwerwiegendere Fehlerzustände und spezielle Expertise erfordernden Servicebedarf eine entsprechende Service- bzw. Wartungsanfrage an das externe Service-Computersystem 2226b übermittelt (beispielsweise per E-Mail, die für eine automatisierte Aktion durch das externe Service-Computersystem 226b vorzugsweise einem vorbestimmten Protokoll genügt).

Ein wichtiger Aspekt einer bevorzugten Ausführungsform der Konfiguration gemäß Fig. 2 ist, dass alle maschineninternen Daten durch das Service-Computersystem 226a zentral gesammelt und ausgewertet werden können. Wie erläutert, können im Falle eines Maschinenausfalls und dergleichen Haustechniker alarmiert bzw. der externe Serviceprovider eingeschaltet werden, wobei eine vollautornatisierte Abwicklung dieser Alarmmeldungen bzw. Serviceanfragen durch das interne Service-Computersystem 226a möglich ist. Das ggf. als "Facility-Management-System" bezeichnete System 226a kann anhand vorbestimmter Kriterien entscheiden, welche Daten über die Firewall 230 nach außen zum Service-Provider (insbesondere zum System 226b) hinausgehen.

Bei der Versendung von Service- und Wartungsanfragen an den externen Provider bzw. bei der Benachrichtigung bzw. Beauftragung eines Haustechnikers können Daten über die betreffende Büromaschine und den betreffenden Fehlerzustand bzw. Servicebedarf mit übermittelt werden, so dass der Techniker bzw. das Serviceprovider-System entsprechend reagieren kann.

Bevorzugt weist das interne Service-Computersystem 226a eine Funktionalität auf, um an dem LAN/WAN 22 (oder - allgemeiner - an dem zugeordneten Computernetz) neu angeschlossene Büromaschinen zu erkennen. Hierzu kann das Service-Computersystem 226a regelmäßig das Computernetz innerhalb eines vorgegebenen Adressenbereichs nach Vorhandensein neu angeschlossener Büromaschinen-Computereinheiten absuchen bzw. durch Rundruf (Broadcast) in einen vorgegebenen Adressenbereich Rückmeldungen von neu hinzu gekommenen Büromaschinen-Computereinheiten initiieren. Letzteres ist dann eine bevorzugte Möglichkeit, wenn in Abweichung von den vorangehenden Darstellungen die Büromaschinen-Computereinheiten dafür ausgelegt sind, nicht nur passiv ein Auslesen bzw. Setzen von internen Daten der Büromaschinen zu ermöglichen, sondern aktiv Betriebszustände (beispielsweise Fehlerzustände) per Datenkommunikation an das Service-Computersystem 226a mitteilen. Im Falle einer derartigen Auslegung der Büromaschinen-Computereinheiten bietet es sich allerdings auch an, diese mit einer Selbstanmelde-Funktionalität zu versehen, die nach Anschluss am Computernetz für eine automatisierte Anmeldung am internen Service-Computersystem 226a sorgt.

Durch das automatisierte Erkennen von neu hinzu gekommenen Büromaschinen bzw. die automatisierte Anmeldung von neu hinzu gekommenen Büromaschinen wird dafür gesorgt, dass das Service-Computersystem 226a stets auf dem neuesten Stand betreffend die angeschlossenen Büromaschinen ist und jeweils neu hinzu gekommene Büromaschinen ohne Zeitverzug in die Betreuung einbezogen werden können. Vom internen Service-Computersystem 226a kann dann nach Erkennen einer neu hinzu gekommenen Büromaschine eine automatisierte Abfrage relevanter Maschinendaten (etwa Maschinentyp, Seriennummer, Voreinstellungen und dergleichen) erfolgen, soweit diese Daten im Falle einer automatisierten Anmeldung von der Büromaschinen-Computereinheit her nicht mit übermittelt wurden.

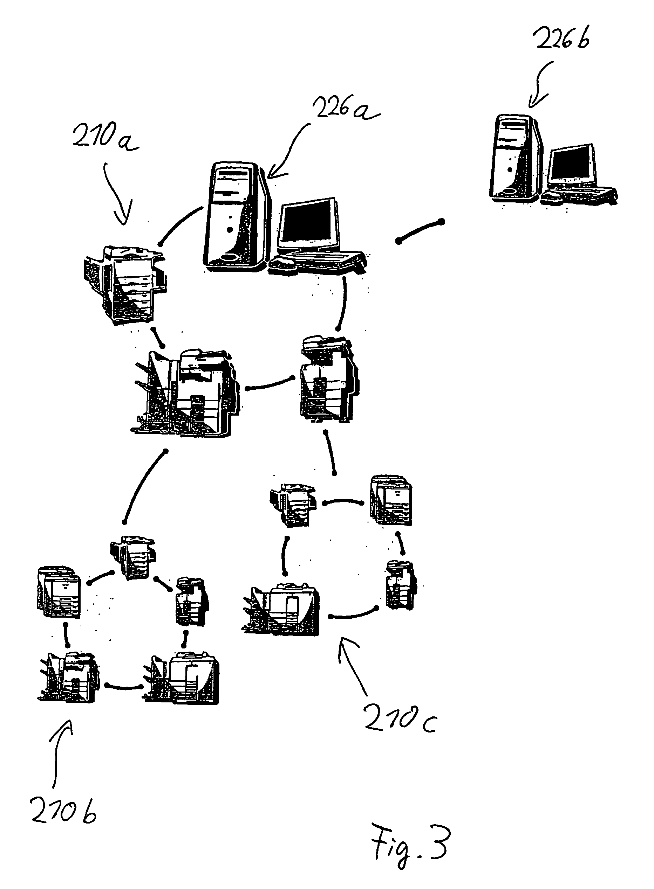

Es sollte noch darauf hingewiesen werden, dass es ohne weiteres möglich ist, von einer zentralen Stelle her auch verschiedene Gruppen von Büromaschinen zu betreuen, die räumlich verteilt sind und beispielsweise zu verschiedenen Niederlassungen und einer Hauptverwaltung einer Firma oder Organisation gehören. Fig. 3 veranschaulicht eine derartige Konfiguration. Hier wird eine Gruppe von Büromaschinen 210a über ein LAN/WAN durch einen internen Service-Computer 226a betreut. Ferner sind über das Internet weitere Gruppen von Büromaschinen 210b und 210c in die Betreuung durch den Service-Computer 226a einbezogen. Die Büromaschinen der jeweiligen Gruppe können jeweils an einem eigenen LAN/WAN angeschlossen sein, von dem aus ein Übergang ins Internet möglich ist (vorzugsweise über eine Firewall).

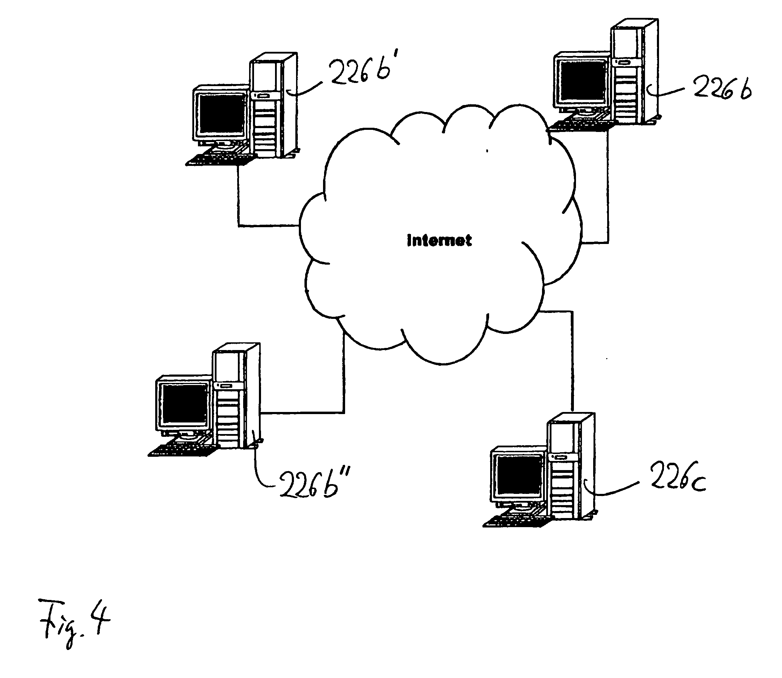

Ein externes Service-Computersystem 226b kann mehreren Systemen der in Fig. 2 und Fig. 3 gezeigten Art, nämlich mehreren Verbünden jeweils aus wenigstens einem internen Service-Computersystem 226a und angeschlossenen bzw. anschließbaren Büromaschinen zugeordnet sein und Service- und Wartungsaufträge von diesen empfangen. Es kann ferner auch möglich sein, dass eine Fernwartung der im Zusammenhang mit Fig. 1 beschriebenen Art ohne Einschaltung eines internen Service-Computersystems an zugeordneten Büromaschinen direkt von dem externen Service-Computersystem erfolgt. Durch diese Fernwartung oder/und durch Vermittung eines jeweiligen internen Service-Computersystems können Daten gewonnen werden, die für eine übergeordnete Stelle, beispielsweise den Büromaschinenhersteller, von Bedeutung sind, beispielsweise um Anfälligkeiten der von ihm produzierten Büromaschinen schnell zu erkennen und dann schnellstmöglich Änderungen an der Konstruktion vornehmen zu können. Ferner ist auf diese Weise eine schnelle Reaktion in Bezug auf schon ausgelieferte Büromaschinen möglich. Beispielsweise kann das entsprechende Austausch-Bauteil schnell bereitgestellt werden oder es können andere vorbeugende Maßnahmen getroffen werden. Es ist sinnvoll, derartige Daten bei einer entsprechenden Service-Organisation zu sammeln. In diesem Zusammenhang wird vorgeschlagen, dass entsprechende externe Service-Computersysteme, die zu verschiedenen Service-Organisationen gehören können, zu einem Gesamtsystem zusammengeschaltet oder zusammenschaltbar sind, zu dem dann noch wenigstens ein übergeordnetes, die betreffenden Informationen sammelndes Informations-Computersystem gehört. Fig. 4 zeigt ein derartiges Gesamtsystem. Es sind mehrere "externe" Service-Computersysteme 226b, 226b' und 226b" und ein diesen zugeordnetes, insbesondereübergeordnetes Informations-Computersystem 226c vorgesehen, das entsprechende Daten von den Service-Computersystemen aktiv abruft oder von den Service-Computersystemen übersandt bekommt. Es kann eine vollautomatische Datenversendung bzw. Datenabfrage implementiert sein. Von dem Informations-Computersystem 226c können ferner auch für die Wartung von zugeordneten Büromaschinen relevante Informationen per Datenkommunikation an die zugeordneten Service-Computersysteme übermittelt werden, beispielsweise Informationen zu Ersatzteilen, Wartungshinweise usw. Soweit für interne Service-Computersysteme in der Art des Systems 226a wie vorangehend beschrieben relevant, können derartige Daten vom jeweiligen externen Service-Computersystem an das interne Service-Computersystem übermittelt werden. Die gesamte Informationsübermittlung ausgehend von den internen Büromaschinendaten bis hoch zum Informations-Computersystem 226c und umgekehrt herunter vom Informations-Computersystem 226c zum externen Service-Computersystem 226b und dann ggf. noch zum internen Service-Computersystem 226a und letztlich, sofern es beispielsweise um Aktualisierung von Firmware und dergleichen geht, bis hinunter zu der einzelnen Büromaschine kann, falls gewünscht, vollautomatisiert erfolgen, ohne dass ein Eingriff durch Bedienpersonen erforderlich ist. In der Regel wird man aber zumindest eine durch eine Bedienperson zu gebende Bestätigung vorsehen wollen, bevor entsprechende Daten übermittelt werden. Für hohe Sicherheit kann man aber auch vorsehen, dass entsprechende Datenkommunikation nur auf durch eine Bedienperson ausdrücklich gegebenen Befehl erfolgt.

Im Folgenden wird näher auf das externe Service-Computersystem gemäß einer vorteilhaften Ausführungsform, das je nach Ausgestaltung zutreffend auch als computergestütztes Service-Management- und Unterstützungs- und Berichtssystem bezeichenbar ist, und ein vorzugsweise von diesem durchgeführtes oder zumindest unterstütztes Verfahren zum Service-Management oder/und zur Service-Unterstützung oder/und zur Generierung von Service-Berichten eingegangen.

Ein im Rahmen oder in Kombination mit der Erfindung vorteilhaft einsetzbares Verfahren zum Service-Management oder/und zur Service-Unterstützung oder/und zur Generierung von Service-Berichten kann beispielsweise die folgenden Schritte bzw. Vorgänge umfassen:
1. Eine Einsatzleitung eines Händlers oder Verleihers von Maschinen, beispielsweise Büromaschinen wie Kopierer, Drucker und Telefaxgeräte oder entsprechende Funktionalitäten aufweisende Multifunktionsgeräte, nimmt eine Mitteilung eines Kundens über die Störung eines Geräts an (Pfeil 100 in Fig. 6) und gibt entsprechende Daten in ein Computersystem (Host-Computersystem) 126 ein. Das betreffende Computersystem kann als Dispatcher-Computersystem bezeichnet werden. Der Dispatcher-Computer, der entsprechende "Anfrage- oder Auftragsdaten" auch automatisiert von einem beispielsweise den Büromaschinen zugeordneten Computer des Kunden per Datenkommunikation erhalten könnte (etwa vom Service-Computer 226a der Fig. 2), hält in einer zugeordneten Datenbank Stammdaten, umfassend insbesondere Maschinendaten betreffend potentiell zu wartende Maschinen und Kundendaten betreffend Kunden, für die bzw. bei denen es zu Wartungs- und Serviceeinsätzen kommen kann. Die Stammdaten können vorteilhaft noch weitere Daten enthalten, beispielsweise Daten, die eine Service- und Wartungshistorie bezogen auf einzelne Maschinen oder/und Kunden angeben, etwa nähere Informationen zu den in der Vergangenheit durchgeführten Service- und Wartungseinsätzen. Die Service- und Wartungshistorie kann sich gewünschtenfalls auf eine vorgegebene Anzahl der zuletzt durchgeführten Einsätze (z. B. die letzten fünf Einsätze) beschränken.
2. Serviceauftragsdaten, die die Störung identifizierende Daten enthalten, werden vom Computersystem 126 per elektronischer Datenkommunikation, vorzugsweise drahtlos, etwa über GSM, zu einem einem Techniker zugeordneten Computersystem 102 (vorzugsweise ein mobiles Computersystem wie etwa ein Laptop) übertragen. In einem auch als Servicecall bezeichenbaren Serviceauftragsdatensatz sind vorzugsweise wenigstens folgende Daten enthalten: Komplette Adresse des Kunden, Standort des Geräts, Vertragsart (Servicevertrag oder Leasing oder Miete, usw.), Informationen zum betreffenden Gerät und - soweit bekannt - zur Art der Störung, Informationen über Störungen in der Vergangenheit (beispielsweise die letzten fünf Störungen).
3. Die Daten können entweder initiiert durch das Computersystem 126 oder initiiert durch das Computersystem 102 vom erstgenannten zum zweitgenannten Computersystem übertragen werden. Beispielsweise kann eine Benutzerschnittstelle des Technikersystems 102 einen Menüpunkt "Datenaustausch" enthalten, der nach Auswahl den Empfang von Serviceauftragsdaten und ggf. die Übersendung von Berichtsdaten betreffend einen vorangehenden Serviceeinsatz an das Computersystem 126 auslöst.
4. Beim Kunden angekommen schließt der Techniker sein Computersystem 102 beispielsweise über eine RS232-Schnittstelle an einem von der Störung betroffenen bzw. einem zu wartenden Gerät 10, beispielsweise ein Kopierer, an. Der Techniker kann dann mittels dem Computersystem 102 per elektronischen Datenaustausch (Pfeil 101 in Fig. 6) maschineninterne Daten abfragen, beispielsweise: Maschinen-Seriennummer, Totalzähler, Konfigurationsdaten, Fehlermeldungen (vorzugsweise mit detaillierter Beschreibung), Zähler von Baugruppen (z. B. Fixierer- oder Heizeinheit usw.) und Zähler von Teilen (beispielsweise Kopierertrommel, Heizwalzen, Einzugsrollen usw.).
5. Der Techniker führt dann die Reparatur/Wartung durch, ggf. auf Grundlage der aus dem Gerät 10 ausgelesenen Daten.
6. Der Techniker setzt dann vermittels des an der Maschine 10 angeschlossenen Computersystems 102 die Zähler von gewarteten bzw. ersetzten Baugruppen/Teilen sowie ggf. auch einen Wartungszähler auf Null zurück und setzt ggf. Konfigurationsdaten (Pfeil 101 in Fig. 6).
7. Anschließend generiert der Techniker mittels des Computersystems 102 einen Servicebericht, in den automatisch per computerinterner Datenübernahme Daten aus dem Serviceauftragsdatensatz eingefügt sind bzw. eingefügt werden, beispielsweise vollständige Kundendaten, Vertragsart usw. Ferner werden in den Servicebericht per computerinterner Datenübernahme aus der betreffenden Maschine 10 ausgelesene interne Daten übernommen. Ferner gibt der Techniker relevante Daten, etwa betreffend die Fahrzeit, die Arbeitszeit, die Art des Besuches (Störung, Wartung, Installation usw.), benutzte Teile (soweit nicht automatisiert durch computerinterne Datenübernahme in den Servicebericht übernommen) ein.
8. Die im Rahmen der Wartung bzw. Beseitigung der Störung benutzten, ggf. ausgetauschten Teile werden vorzugsweise durch eine entsprechende Funktionalität des Computersystems 102 auf Richtigkeit überprüft, und es wird, soweit Ersatzteile aus einem Wagenbestand des Technikers entnommen wurden, automatisch eine Bestellung für das Wiederauffüllen des Wagenbestands zur Übermittlung etwa an ein Ersatzteillager generiert. Dem Computersystem 102 kann eine Leseeinrichtung, beispielsweise ein Barcodeleser 103 zugeordnet sein, der für die Überprüfung auf Richtigkeit bzw. die Nachbestellung das Einlesen von Teile-Nummern und dergleichen ermöglicht.
9. Es kann vorgesehen sein, dass der Servicebericht ausgedruckt wird, etwa zur Übergabe an den Kunden oder/und sicherheitshalber für den Fall eines Datenverlustes. Es kann eine Funktionalität des mobilen Computers 102 vorgesehen sein, die es vorteilhaft ermöglicht, ein Telefaxgerät des jeweiligen Kunden zum Ausdruck des Serviceberichts oder eines speziellen "Kunden-Serviceberichts" zu verwenden, vorzugsweise per drahtloser Telekommunikation über das öffentliche Telekommunikationsnetz.
10. Der Servicebericht wird dann beispielsweise über den Menüpunkt "Datenaustausch" per elektronischer Datenkommunikation, vorzugsweise über GSM, vom Techniker-Computersystem 102 zum Computersystem 126 der zentralen Servicestelle übermittelt. In diesem Zusammenhang kann der nächste Serviceauftragsdatensatz oder können die nächsten Serviceauftragsdatensätze empfangen werden. Die vom Computersystem 126 empfangenen Daten stehen dann beispielsweise für die Fakturierung, die Ersatzteil-Bestellung oder Ersatzteil-Nachbestellung und die weitere Kundenbetreuung zur Verfügung.

Bezug nehmend auf Fig. 6 ist noch zu erläutern, dass das Computersystem 126 beispielsweise Teil eines Warenwirtschaftssystems WWS sein kann. Das Techniker-Computersystem 102 enthält vorzugsweise drei gesonderte Datenbestände, nämlich eine die Serviceauftragsdaten und die Berichtsdaten aufnehmende Datenbasis 104, eine die aus der jeweiligen Maschine ausgelesenen Daten aufnehmende Datenbasis 106 und eine Ersatzteildaten enthaltende Datenbasis 108. Neben einer allgemeinen "Ersatzteil-Datenbasis", beispielsweise auf CD-ROM, kann eine sich speziell auf einen Ersatzteil-Wagenbestand des Technikers beziehende "Ersatzteil-Datenbasis" vorgesehen sein. Bestelldaten müssen nicht zwingend über das Computersystem 126 des Händlers weitergeleitet werden, sondern können, falls gewünscht, vom Technikersystem 102 auch an ein gesondertes, ggf. dem Maschinenhersteller zugeordnetes Computersystem 110 per elektronischer Datenkommunikation übermittelt werden.

Vorzugsweise sind bei dem vorstehend angesprochenen System die folgenden Funktionen bzw. sind in dem vorstehend angesprochenen Verfahren die folgenden Schritte vorgesehen:
- Import der Stammdaten und Serviceanforderungen von einem den Service steuernden Computersystem, ggf. vom WWS-System eines Händlers oder Geräteverleihers;
- Import von geräteinternen Daten (so genannte FSMS-Daten; FSMS = Field Service Management System) von einem Gerät (beispielsweise einem Kopierer oder Drucker; interne Daten sind beispielsweise Zählerstände und Fehlermeldungen);
- Übernahme und Anzeige detaillierter Kunden- und Maschinen- bzw. Gerätedaten;
- Erstellung eines Serviceberichts;
- Erstellung bzw. Bereitstellung eines Installationsberichts;
- Überprüfung von Bauteilen anhand einer Bauteiledatenbank (z. B. ESPOS-Funktionalität bzw. ESPOS-System, ESPOS = Express Space Parts Operation System);
- Generierung von Ersatzteilbestellungen (extern, etwa über TOPAS-Funktionalität oder TOPAS-System, oder über Händler-WWS; TOPAS = Toshiba online Parts Assistance Service), insbesondere betreffend für ein Gerät bzw. Geräte benötigte Ersatzteile zum dortigen Einbau während eines späteren Service-Einsatzes oder/und betreffend Ersatzteile zum Auffüllen eines Wagen-Ersatzteilbestands;
- Versand von Serviceberichten an das den Service steuernde System, insbesondere das Warenwirtschaftssystem des Händlers oder Verleihers.

Es können beispielsweise die folgenden Vorteile erreicht werden:
- Reduzierung von Servicezeiten durch Dateneingabe in einem Arbeitsschritt;
- Sicherstellung korrekter Teilenummern und Servicedaten;
- umgehende Fakturierung von Serviceleistungen;
- detaillierte Beschreibung von Fehlermeldungen;
- es können ohne Weiteres Schnittstellen-Adapter für unterschiedliche Händler-Warenwirtschaftssysteme oder dergleichen bereitgestellt werden;
- es ist eine einfache, insbesondere konsolidierte Fehlerdatenanalyse auf Grundlage der Berichtsdaten möglich;
- relevante bzw. betroffene Datenbestände können einfach aktualisiert werden.

Die schnelle Erstellung des Serviceberichts, die Bereitstellung der Stammdaten und Serviceanforderungen direkt durch das Warenwirtschaftssystem der den Service anbietenden Stelle (etwa Händler oder allgemein Service-provider), die Reduzierung der Servicezeiten, die Sicherstellung korrekter Teilenummern und Servicedaten, die detaillierte Beschreibung von Fehlermeldungen und die konsolidierte Felddatenanalyse bietet Vorteile sowohl für den "Servide-Provider" als auch für den Endkunden. In Kombination mit einer Ferndiagnose oder Fernwartung entsprechend Fig. 1 können weitere Vorteile erreicht werden, nämlich die Einsparung von Servicekosten durch Reduzierung von Servicebesuchen und die Möglichkeit, permanent die Betriebssoftware (Firmware) des jeweiligen Geräts zu aktualisieren. Überflüssige Servicebesuche können durch direkte Abfrage von gerätinternen Daten (insbesondere Zählerstände und Fehlercodes) vermieden werden. Es lassen sich sowohl die Bedürfnisse von Großkunden als auch von Kleinkunden gut abdecken.

Es können insbesondere die folgenden Lösungsvorschläge Vorteile bringen:
- Servicereportdaten werden direkt in ein Technikersystem (etwa das Technikersystem 102) eingegeben;
- Serviceauftragsdatensätze (so genannte "Servicecalls") und Serviceberichte werden elektronisch zwischen dem Technikersystem und einem Hostsystem, insbesondere dem System 126, ausgetauscht;
- aus einem Kundengerät ausgelesene Daten (so genannte FSMS-Daten) werden automatisch in einen jeweiligen Servicebericht übernommen;
- Bestelldaten, etwa zur Bestellung von Ersatzteilen, können elektronisch an ein Bestellungen bearbeitendes System (etwa TEG/GO über ESPOS/TOPAS) übermittelt werden.

Es ist von Vorteil, wenn das Technikersystem 102 wenigstens einige der folgenden Funtionalitäten bereitstellt:
- Import von Masterdaten oder Stammdaten und Serviceauftragsdaten (so genannte Servicecalls) vom Host-System,
- Anzeige von detaillierten Kunden- und Maschinendaten,
- Erstellung und Bereithaltung von Serviceberichten,
- Erstellung von Installationsberichten,
- Import von geräteinternen Daten (etwa Fehler- und Zählerinformation),
- Überprüfung der Geeignetheit bzw. Gültigkeit von Ersatzteilen bzw. Gebrauchsteilen (etwa über ESPOS),
- Erzeugung von Bestelldaten (etwa für TOPAS),
- Übersendung von Service- und Installationsberichten an das Host-System.

Das Technikersystem 102 kann vorteilhaft Schnittstellen zu folgenden Systemen bzw. Geräten aufweisen:
- zum Host-System einer den Service steuernden Stelle (etwa eines Händlers) oder zu mehrern derartigen Systemen,
- zu Geräten, auf die sich Serviceaufträge beziehen,
- zu einem FSMS-System (soweit nicht in das Technikersystem integriert),
- zu einer Teiledatenbank (etwa ESPOS), soweit nicht in das Technikersystem integriert,
- zu einem Bestellungsweiterbearbeitungssystem (etwa TOPAS).

Es können vor allem die folgenden Vorteile auf einfache Weise und zuverlässig erreicht werden:
- Richtige Teilenummern und Serviceauftragsdaten;
- bessere Qualität der ermittelten Fehlerdaten;
- Dateneingabe in einem Schritt;
- Möglichkeit einer konsolidierten Analyse von aus einer Mehrzahl von Maschinen ausgelesenen internen Daten;
- größere Zuverlässigkeit hinsichtlich der Steuerung des Technikereinsatzes;
- Änderungen von Kundendaten und Konfigurationsdaten können auf einfache Weise und zuverlässig in das Host-System überführt werden;
- es können offene Schnittstellen zu verschiedenen Host-Systemen vorgesehen sein;
- eine Weiternutzung von entsprechend aufbereiteten Daten in einem zugeordneten Warenwirtschaftssystem ist auf einfache Weise möglich.

## Patentansprüche

1. System, umfassend eine Mehrzahl von Büromaschinen (10, 12, 14, 16, 18) und wenigstens eine Service-Computereinheit-(26),
wobei die jeweilige Büromaschine
eine elektronische Steuereinheit und eine Datenkommunikationsschnittstelle aufweist, wobei über die Datenkommunikationsschnittstelle interne Daten der Büromaschine auslesbar und interne Daten der Büromaschine setzbar sind,
wobei den Büromaschinen (10) jeweils eine Computereinheit (20) zugeordnet ist, die auf interne Daten der Büromaschine zugreifen kann und dafür ausgelegt ist, ein Auslesen von internen Daten der jeweiligen Büromaschine und ein Setzen von internen Daten der Büromaschine zumindest per Datenkommunikation über ein Computernetz zu ermöglichen,
wobei die den Büromaschinen zugeordneten Computereinheiten (20) und die Service-Computereinheit (26) jeweils an einem Computernetz (24) angeschlossen oder anschließbar sind und dafür ausgelegt sind, dass von Seiten der Service-Computereinheit (26) interne Daten der Büromaschine per Datenkommunikation über das Computernetz auslesbar sind und dass von Seiten der Service-Computereinheit (26) interne Daten der Büromaschine per Datenkommunikation über das Computernetz setzbar sind oder/und interne Betriebssoftware oder Firmware aktualisierbar ist,
und wobei die Service-Computereinheit (226a) eine Auswerte-Funktionalität zur automatisierten Auswertung von ausgelesenen internen Daten der Büromaschinen und eine Berichts-Funktionalität zur automatisierten Bereitstellung von Berichtsdaten und von auf den Berichtsdaten beruhenden Berichten an einer Nutzerschnittstelle auf Grundlage der ausgelesenen Daten und der durchgeführten Auswertung oder Auswertungen aufweist,
wobei wenigstens eine der folgenden Auswertungen automatisiert erfolgt und entsprechende Berichtsdaten automatisiert bereitgestellt werden:
- Erstellung von Benutzer-Statistiken,
- Erstellung von Kostenauswertungen,
- Erstellung von Angaben über erbrachte Leistungen in Zuordnung zur jeweiligen Büromaschine und zu zugeordneten Kostenstellen,
- statistische Auswertung von auftretenden Fehlermeldungen und Maschinenausfällen,
- Analyse der Auslastung der Büromaschinen,
und
wobei die Service-Computereinheit (226a) eine Benachrichtigungsfunktionalität zum automatisierten Bereitstellen und ggf. Versenden von sich auf vorbeugende oder/und akute Wartungs- oder Service-Arbeiten an wenigstens einer der Büromaschinen beziehenden Daten oder/und Mitteilungen per Datenkommunikation oder/und Telekommunikation an wenigstens ein zugeordnetes Kommunikationsgerät oder/und wenigstens eine zugeordnete weitere Computereinheit aufweist.

2. System nach Anspruch 1, **dadurch gekennzeichnet, dass** die jeweilige Computereinheit (20) dafür ausgelegt ist, gemäß einem vorgegebenen Abfrageschema interne Daten der Büromaschine (10) abzufragen oder/und gemäß einem vorgegebenen Berichtsschema auf den abgefragenen Daten beruhende Berichtsdaten an eine zugeordnete Datenkommunikationsadresse zu übermitteln.

3. System nach Anspruch 1 oder 2, **dadurch gekennzeichnet, dass** die jeweilige Computereinheit (20) WEB-Server-Funktionalität aufweist oder als WEB-Server konfiguriert oder konfigurierbar ist.

4. System nach einem der Ansprüche 1 bis 3, **dadurch gekennzeichnet, dass** das Computernetz das Internet (24) oder/und ein Intranet umfasst.

5. System nach einem der Ansprüche 1 bis 4, **dadurch gekennzeichnet, dass** das Computernetz ein LAN (22) oder WAN umfasst.

6. System nach einem der Ansprüche 1 bis 5, **dadurch gekennzeichnet, dass** die jeweilige elektronische Steuereinheit die Computereinheit bildet und die Datenkommunikationsschnittstelle als Computernetz-Datenkommunikationsschnittstelle ausgeführt ist oder dass die Computereinheit (20) eine eigene Computernetz-Datenkommunikationsschnittstelle aufweist.

7. System nach Anspruch 6, **dadurch gekennzeichnet, dass** die jeweilige Computereinheit (20) an der Datenkommunikationsschnittstelle der Büromaschine (10) angeschlossen oder anschließbar ist.

8. System nach Anspruch 7, **dadurch gekennzeichnet, dass** die Datenkommunikationsschnittstelle der jeweiligen Büromaschine eine serielle Schnittstelle oder/und eine parallele Schnittstelle oder/und eine Ethernet-Schnittstelle umfasst.

9. System nach einem der Ansprüche 1 bis 8, **dadurch gekennzeichnet, dass** die jeweilige Büromaschine als Kopiergerät (10) oder/und Druckergerät oder/und Telefaxgerät oder/und Scanner ausgebildet ist bzw. im Falle eines Mehrfunktionsgeräts entsprechende Funktionalitäten aufweist.

10. System nach Anspruch 9, **dadurch gekennzeichnet, dass** betreffend die jeweilige Büromashine über das Computernetz (24) zumindest einige der folgenden internen Daten auslesbar sind:
- Seriennummer der Geräts oder/und wenigstens einer internen Komponente des Geräts,
- Zählerstand eines allen Papier-Einzügen oder/und Kopierwerken des Geräts zugeordneten Gesamt-Zählers,
- wenigstens ein Zählerstand eines Wartungszählers oder/und Abrechnungszählers oder/und wenigstens eines sonstigen Zählers, ggf. wenigstens ein einem einzelnen Papier-Einzug des Geräts zugeordneter Zählerstand oder/und wenigstens ein einem einzelnen Kopierwerk des Geräts zugeordneter Zählerstand,
- Fehlermeldungen oder/und sonstige Zustandsdaten
- Konfigurationsdaten
- Betriebssoftware- oder Firmware-Version.

11. System nach Anspruch 9 oder 10, **dadurch gekennzeichnet, dass** über das Computernetz (24) zumindest Konfigurationsdaten des jeweiligen Geräts setzbar sind oder/und wenigstens ein Zähler rücksetzbar ist.

12. System nach einem der Ansprüche 9 bis 11, **dadurch gekennzeichnet, dass** über das Computernetz (24) interne Betriebssoftware oder Firmware der jeweiligen Büromaschine aktualisierbar ist.

13. System nach einem der vorhergehenden Ansprüche, **dadurch gekennzeichnet, dass** die Datenkommunikation zum Auslesen bzw. Setzen der internen Daten über das Computernetz (24) von einer zugeordneten, ggf. externen Service-Computereinheit (26) initiierbar ist.

14. System nach einem der vorhegehenden Ansprüche, **dadurch gekennzeichnet, dass** die Service-Computereinheit (226a) über ein erstes Computernetz mit Computereinheiten (20, 20', 20") in Kommunikationsverbindung steht, die einer ersten Gruppe (210; 210a) von Büromaschinen (10, 10', 10") zugeordnet sind, und dass die Service-Computereinheit (226a) über ein zweites Computernetz mit Computereinheiten (20, 20', 20") in Kommunikationsverbindung steht, die wenigstens einer weiteren Gruppe (210b, 210c) von Büromaschinen zugeordnet sind.

15. System nach Anspruch 14, **dadurch gekennzeichnet, dass** das erste Computernetz ein LAN, WAN oder Intranet umfasst.

16. System nach Anspruch 14 oder 15, **dadurch gekennzeichnet, dass** das zweite Computernetz das Internet umfasst.

17. System nach einen der vorhergehenden Ansprüch, **dadurch gekennzeichnet, dass** die zugeordnete weitere Computereinheit einem computergestütztes Service-Management- oder/und Unterstützungs- oder/und Bericht-System zugeordnet ist, umfassend:
- ein die weitere Computereinheit umfassendes erstes Computersystem (126), das Stammdaten betreffend Kunden oder/und potentiell zu wartende Maschinen (10), beispielsweise Büromaschinen wie Kopierer, Drucker, Scanner und Telefaxgeräte oder entsprechende Funktionalitäten aufweisende Multifunktionsgeräte, in einer Datenbasis hält und in das Anfragedaten betreffend Service-oder Wartungsanfragen eingebbar sind;
- wenigstens ein mobiles zweites Computersystem (102), das eine Datenkommunikationsschnittstelle zum Empfang von Serviceauftragsdaten vom ersten Computersystem (126) per Datenkommunkation, insbesondere per drahtloser Datenkommunikation, und zum Übersenden von sich auf erledigte oder/und in Arbeit befindliche Serviceaufträge oder/und Folge-Serviceaufträge beziehenden Berichtsdaten und ggf. Ersatzteil-Bestelldaten an das erste Computersystem (26) per Datenkommunkation, insbesondere perdrahtloser Datenkommunikation, aufweist;
wobei das erste Computersystem (126) automatisiert auf Grundlage der Stammdaten und der Anfragedaten Serviceauftragsdaten generiert und an das zweite Computersystem (102), ggf. durch dieses initiiert, per Datenkommunikation übermittelt oder/und wobei das zweite Computersystem (102) automatisiert Berichtsdaten an das erste Computersystem (126) per Datenkommunikation übermittelt.

18. System nach Anspruch 17, **dadurch gekennzeichnet, dass** die Benachrichtigungsfunktionalität dafür ausgelegt ist, in Abhängigkeit von ausgelesenen internen Daten Anfragedaten betreffend Service-oder Wartungsanfragen vermittels der weiteren Computereinheit in das erste Computersystem einzugeben.

19. System nach Anspruch 17 oder 18, **dadurch gekennzeichnet, dass** die Berichts-Funktionalität dafür ausgelegt ist, Berichtsdaten vermittels der weiteren Computereinheit an das erste Computersystem zu übergeben.

20. Gesamtsystem, umfassend das System nach einem der Ansprüche 17 bis 19 und das diesem zugeordnete, in Anspruch 17 angesprochene computergestützte Service-Management- oder/und Unterstützungs- oder/und Bericht-System.

21. Gesamtsystem, umfassend mehrere Systeme nach einem der Ansprüche 17 bis 19 und ein diesen gemeinsam zugeordnetes computergestützte Service-Management- oder/und Unterstützungs-oder/und Bericht-System wie in Anspruch 17 angesprochen.

22. Gesamtsystem, umfassend mehrere Systeme nach Anspruch 20 oder 21 und ein diesen gemeinsam zugeordnetes computergestütztes Informationssystem, umfassend wenigstens ein Computersystem, das Informationsdaten betreffend Büromaschinentypen und deren Wartung in einer Datenbasis hält zum Abruf durch oder/und zum Versenden an ein jeweiliges Service-Management- oder/und Unterstützungs- oder/und Bericht-System per Datenkommunikation, oder/und das eine Funktionalität zum Empfangen und Ablegen in einer Datenbasis sowie ggf. Auswerten von von den Service-Management oder/und Unterstützungs- oder/und Bericht-Systemen per Datenkommunikation übermittelten Berichtsdaten aufweist.

23. System nach einem der vorhergehenden Ansprüche, **dadurch gekennzeichnet, dass** die Benachrichtigungsfunktionalität dafür ausgelegt ist, in Abhängigkeit von den ausgelesenen Daten oder auf diesen beruhenden abgeleiteten Daten zwischen mehreren zugeordneten Kommunikationsgeräten oder/und mehreren zugeordneten weiteren Computereinheiten auszuwählen, an das bzw. die die sich auf vorbeugende oder/und akute Wartungs- oder Service-Arbeiten an wenigstens einer der Büromaschinen beziehenden Daten oder/und Mitteilungen bereitzustellen bzw. zu versenden sind.

24. System nach einem der vorhergehenden Ansprüche, **dadurch gekennzeichnet, dass** die Service-Computereinheit eine Rundruf- oder/und Such-Funktionalität aufweist, die zugeordnete Büromaschinen vermittels der jeweils zugeordneten Computereinheit über das Computernetz erkennt.

25. System nach Anspruch 24, **dadurch gekennzeichnet**, **dadurch gekennzeichnet, dass** die Rundruf- oder/und Such-Funktionalität auf ein Erkennen einer jeweiligen neu-zugeordneten Büromaschine anspricht und einen vorgegebenen Datensatz von internen Daten dieser Büromaschine über das Computernetz ausliest und in einer vorgegebenen Weise verarbeitet oder/und abspeichert.

26. Verfahren zur Betreuung oder/und zur Fernwartung oder/und zum Management einer Mehrzahl von Büromaschinen oder/und zur Bereitstellung von sich auf wenigstens eine der Büromaschinen beziehender Information, **gekennzeichnet durch** ein Auslesen von internen Daten wenigstens einer der Büromaschinen oder/und ein Setzen von internen Daten wenigstens einer der Büromaschinen per drahtloser Datenkommunikation oder/und per Datenkommunikation über ein Computernetz oder/und per Datenkommunikation über eine Modemverbindung, und **durch** die Verwendung eines systems nach einem der vorhergehenden Ansprüche.

## Claims

1. A system comprising a plurality of office machines (10, 12, 14, 16, 18) and at least one servicing computer unit (26), wherein the particular office machine comprises an electronic control unit and a data communication interface, wherein internal data of the office machine may be read out and internal data of the office machine are settable via the data communication interface, wherein a computer unit (20) is assigned to the office machines (10), which computer unit is capable of accessing the internal data of the office machine and is designed to permit reading out of internal data of the particular office machine and setting of internal data of the office machine at least by data communication over a computer network, wherein the computer units (20) assigned to the office machines and the servicing computer unit (26) are in each case connected or connectable to a computer network (24) and are designed such that the servicing computer unit (26) can read out internal data of the office machine by data communication over the computer network and that internal data of the office machine can be set by the servicing computer unit (26) by data communication over the computer network and/or internal operating software or firmware can be updated,
and wherein the servicing computer unit (226a) comprises evaluation functionality for the automated evaluation of internal data which have been read out from the office machines and reporting functionality for the automated provision of report data and optionally of reports based on the report data to a user interface on the basis of the data which have been read out and optionally of the evaluation or evaluations performed,
wherein at least one of the following evaluations proceeds automatically and corresponding report data are automatically provided:
- preparation of user statistics,
- preparation of cost evaluations,
- preparation of information about services provided broken down by the particular office machine and by the assigned cost centres,
- statistical evaluation of error messages and machine failures which occur,
- analysis of office machine capacity utilisation, and wherein the servicing computer unit (226a) comprises notification functionality for the automated provision and optional dispatch of data relating to preventive and/or acute servicing operations on at least one of the office machines and/or of messages by data communication and/or telecommunication to at least one assigned communication device and/or at least one assigned further computer unit.

2. A system according to claim 1, **characterised in that** the particular computer unit (20) is designed to query internal data of the office machine (10) in accordance with a predetermined query scheme and/or to transfer report data based on the queried data to an assigned data communication address in accordance with a predetermined reporting scheme.

3. A system according to claim 1 or 2, **characterised in that** the particular computer unit (20) comprises web server functionality or is configured or configurable as a web server.

4. A system according to one of claims 1 to 3, **characterised in that** the computer network includes the internet (24) and/or an intranet.

5. A system according to one of claims 1 to 4, **characterised in that** the computer network includes a LAN (22) or WAN.

6. A system according to one of claims 1 to 5, **characterised in that** the particular electronic control unit constitutes the computer unit and the data communication interface takes the form of a computer network data communication interface or that the computer unit (20) has its own computer network data communication interface.

7. A system according to claim 6, **characterised in that** the particular computer unit (20) is connected or connectable to the data communication interface of the office machine (10).

8. A system according to claim 7, **characterised in that** the data communication interface of the particular office machine comprises a serial interface and/or a parallel interface and/or an Ethernet interface.

9. A system according to one of claims 1 to 8, **characterised in that** the particular office machine takes the form of a copier (10) and/or printer and/or fax machine and/or scanner or, in the case of a multifunction device, has corresponding functionalities.

10. A system according to claim 9, **characterised in that** at least some of the following internal data concerning the particular office machine may be read out over the computer network (24):
- serial number of the device and/or at least one internal component of the device,
- counter reading of a total counter assigned to all paper sources and/or duplicating units of the device,
- at least one counter reading of a servicing counter and/or accounts counter and/or at least one other counter, optionally at least one counter reading assigned to an individual paper source of the device and/or at least one counter reading assigned to an individual duplicating unit of the device,
- error messages and/or other status data
- configuration data
- operating software or firmware version.

11. A system according to claim 9 or 10, **characterised in that** at least configuration data of the particular device are settable and/or at least one counter is resettable over the computer network (24).

12. A system according to one of claims 9 to 11, **characterised in that** internal operating software or firmware of the particular office machine can be updated over the computer network (24).

13. A system according to one of the preceding claims, **characterised in that** the data communication for reading out or setting the internal data can be initiated over the computer network (24) by an assigned, optionally external servicing computer unit (26).

14. A system according to one of the preceding claims, **characterised in that** the servicing computer unit (226a) is in communication with computer units (20, 20', 20") which are assigned to a first group (210; 210a) of office machines (10, 10', 10") and that the servicing computer unit (226a) is in communication over a second computer network with computer units (20, 20', 20") which are assigned to at least one further group (210b, 210c) of office machines.

15. A system according to claim 14, **characterised in that** the first computer network includes a LAN, WAN or intranet.

16. A system according to claim 14 or 15, **characterised in that** the second computer network includes the internet.

17. A system according to one of the preceding claims, **characterised in that** the assigned further computer unit is assigned to a computer-aided servicing management and/or support and/or reporting system comprising:
- a first computer system (126) including the further computer unit, which computer system keeps master data relating to customers and/or machines (10) potentially requiring servicing, for example office machines such as copiers, printers, scanners and fax machines or multifunction devices comprising corresponding functionalities, in a database and into which query data relating to servicing queries can be input;
- at least one mobile second computer system (102) which comprises a data communication interface for receiving servicing task data from the first computer system (126) by data communication, in particular by wireless data communication, and for sending report data relating to servicing tasks which have been completed and/or are under way and/or to follow-up servicing tasks and optionally spare parts order data to the first computer system (26) by data communication, in particular by wireless data communication;
wherein, on the basis of the master data and the query data, the first computer system (126) automatically generates servicing task data and transfers the latter to the second computer system (102), optionally initiated by the latter, by data communication and/or wherein the second computer system (102) automatically transfers report data to the first computer system (126) by data communication.

18. A system according to claim 17, **characterised in that** the notification functionality is designed, as a function of the internal data which have been read out, to input query data relating to servicing queries into the first computer system by means of the further computer unit.

19. A system according to claim 17 or 18, **characterised in that** the reporting functionality is designed to send report data to the first computer system by means of the further computer unit.

20. An overall system comprising the system according to one of claims 17 to 19 and the computer-aided servicing management and/or support and/or reporting system assigned thereto and mentioned in claim 17.

21. An overall system comprising two or more systems according to one of claims 17 to 19 and a common computer-aided servicing management and/or support and/or reporting system assigned thereto as mentioned in claim 17.

22. An overall system comprising two or more systems according to claim 20 or 21 and a common computer-aided information system assigned thereto comprising at least one computer system which keeps information data relating to office machine models and the servicing thereof in a database for retrieval by and/or for sending to a particular servicing management and/or support and/or reporting system by data communication, and/or which has a functionality for receiving and storing in a database and optionally evaluating report data transferred from the servicing management and/or support and/or reporting system by data communication.

23. A system according to one of the preceding claims, **characterised in that** the notification functionality is designed, as a function of the internal data which have been read out or of derived data based thereon, to select between two or more assigned communication devices and/or two or more assigned further computer units to which the data and/or messages relating to preventive and/or acute servicing operations on at least one of the office machines are to be provided or sent.

24. A system according to one of the preceding claims, **characterised in that** the servicing computer unit has a broadcast and/or search functionality which, over the computer network, recognises the assigned office machines by means of the particular assigned computer unit.

25. A system according to claim 24, **characterised in that** the broadcast and/or search functionality responds to recognition of a particular newly assigned office machine and reads out a predetermined data record of internal data from said office machine over the computer network and processes and/or stores it in a predetermined manner.

26. A method for supporting and/or remotely servicing and/or managing a plurality of office machines and/or for providing information relating to at least one of the office machines, **characterised by** reading out of internal data of at least one of the office machines and/or setting of internal data of at least one of the office machines by wireless data communication and/or by data communication over a computer network and/or by data communication over a modem connection, and by the use of a system according to one of the preceding claims.

## Revendications

1. Système comportant plusieurs machines de bureau (10, 12, 14, 16, 18) et au moins une unité informatique de service (26),
dans lequel chaque machine de bureau comprend une unité de commande électronique et une interface de communication de données, dans lequel des données internes de la machine de bureau peuvent être lues et des données internes de la machine peuvent être enregistrées, via l'interface de communication des données,
dans lequel est associée aux machines de bureau (10), respectivement une unité informatique (20) qui peut accéder aux données internes de la machine de bureau et qui est conçue pour permettre la lecture des données internes de chaque machine de bureau et l'enregistrement des données internes de la machine de bureau, au moins par communication de données via un réseau informatique,
dans lequel les unités informatiques (20) associées aux machines de bureau et l'unité informatique de service (26) sont respectivement raccordées ou raccordables à un réseau informatique (24) et sont conçues pour que les données internes de la machine de bureau puissent être lues côté unité informatique de service (26) par la communication de données via le réseau informatique et pour que les données internes de la machine de bureau puissent être enregistrées côté unité informatique de service (26) via le réseau informatique et/ou qu'un logiciel d'exploitation interne ou un micrologiciel puisse être actualisé,
et dans lequel l'unité informatique de service (226a) comporte une fonctionnalité d'analyse pour l'analyse automatisée des données
internes des machines de bureau lues et une fonctionnalité de reporting pour la mise à disposition automatisée à une interface utilisateur, de données de rapport et de rapports s'appuyant sur les données des rapports, sur la base des données lues et de l'analyse ou des analyses effectuées,
dans lequel au moins l'une des analyses suivantes s'effectue de manière automatisée et dans lequel les données de reporting correspondantes sont mises à disposition de manière automatisée :
- élaboration de statistiques utilisateur,
- élaboration d'analyses de coûts,
- élaboration d'informations sur les prestations mises à disposition, avec affectation à chaque machine de bureau et centres de coûts liés,
- analyse statistique des messages d'erreur édités et des défaillances des machines,
- analyse de la charge des machines de bureau,
et
dans lequel l'unité informatique de service (226a) contient une fonctionnalité d'avertissement pour la mise à disposition automatique et le cas échéant, l'envoi de données se rapportant à des opérations de maintenance ou de service préventives et/ou urgentes, sur l'une des machines de bureau au moins et/ou de messages, par communication de données et/ou par télécommunication, à au moins un appareil de communication associé et/ou à au moins une autre unité informatique associée.

2. Système selon la revendication 1, **caractérisé en ce que** chaque unité informatique (20) est conçue pour interroger les données internes d'une machine de bureau (10) selon un schéma d'interrogation prédéfini et/ou pour transmettre à une adresse de communication de données associée, les données de rapport, s'appuyant sur les données interrogées, selon un schéma de reporting prédéfini.

3. Système selon la revendication 1 ou 2, **caractérisé en ce que** chaque unité informatique (20) comporte une fonctionnalité de serveur WEB, ou est configurée ou peut être configurée comme serveur WEB.

4. Système selon l'une quelconque des revendications 1 à 3, **caractérisé en ce que** le réseau informatique comprend Internet (24) et/ou Intranet.

5. Système selon l'une quelconque des revendications 1 à 4, **caractérisé en ce que** le réseau informatique comprend un LAN (22) ou WAN.

6. Système selon l'une quelconque des revendications 1 à 5, **caractérisé en ce que** chaque unité de commande électronique forme l'unité informatique et **en ce que** l'interface de communication de données est réalisée sous la forme d'une interface de communication de données informatique ou **en ce que** l'unité informatique (20) comprend un interface de communication de données de réseau informatique propre.

7. Système selon la revendication 6, **caractérisé en ce que** chaque unité informatique (20) est reliée ou peut être reliée à l'interface de communication de données de la machine de bureau (10).

8. Système selon la revendication 7, **caractérisé en ce que** l'interface de communication de données de la machine de bureau concernée comprend une interface série et/ou une interface parallèle et/ou une interface Ethernet.

9. Système selon l'une quelconque des revendications 1 à 8, **caractérisé en ce que** chaque machine de bureau est réalisée sous forme d'un copieur (10) et/ou d'une imprimante et/ou d'un télécopieur et/ou d'un scanner ou dans le cas d'un appareil multifonctions, comporte les fonctionnalités correspondants.

10. Système selon la revendication 9, **caractérisé en ce qu'**au moins quelques unes des données internes suivantes, relatives à chaque machine de bureau, peuvent être lues via le réseau informatique (24) :
- le numéro de série de l'appareil et/ou au moins l'une des composantes internes de l'appareil,
- l'état du compteur d'un compteur totaliseur associé à tous les dispositifs d'alimentation en papier et/ou aux organes de copie de l'appareil,
- au moins un état de compteur d'un compteur de maintenance et/ou au moins d'un autre compteur et/ou d'un compteur de facturation et/ou au moins d'un autre compteur, le cas échéant au moins un état du compteur associé à un dispositif d'alimentation de papier individuel de l'appareil et/ou au moins un état du compteur associé à un organe de copie de l'appareil,
- les messages d'erreur et/ou les autres données d'état,
- les données de configuration
- la version du logiciel d'exploitation ou du micrologiciel.

11. Système selon la revendication 9 ou 10, **caractérisé en ce que** via le réseau informatique (24), les données de configuration de chaque appareil au moins sont enregistrables et/ou un compteur au moins peut être réinitialisé.

12. Système selon l'une quelconque des revendications 9 à 11, **caractérisé en ce que** le logiciel d'exploitation ou le micrologiciel interne de chaque machine de bureau peut être actualisé via le réseau informatique (24).

13. Système selon l'une quelconque des revendications précédentes, **caractérisé en ce que** la communication de données pour la lecture ou l'enregistrement des données internes via le réseau informatique (24) peut être initié par une unité informatique de maintenance (26) associée, le cas échéant externe.

14. Système selon l'une quelconque des revendications précédentes, **caractérisé en ce que** l'unité informatique de maintenance (226a) est en liaison de communication, via un premier réseau informatique, avec les unités informatiques (20, 20', 20") qui sont associées à un premier groupe (210 ; 210a) de machines de bureau (10, 10', 10") et **en ce que** l'unité informatique de service (226a) est en liaison de communication, via un deuxième réseau informatique, avec les unités informatiques (20, 20', 20") qui sont associées à un autre groupe (210b, 210c) de machines de bureau au moins.

15. Système selon la revendication 14, **caractérisé en ce que** le premier réseau informatique comprend un LAN, un WAN ou Intranet.

16. Système selon la revendication 14 ou 15, **caractérisé en ce que** le deuxième réseau informatique comprend Internet.

17. Système selon l'une quelconque des revendications précédentes, **caractérisé en ce que** l'autre unité informatique associée est associée à un système de gestion de service et/ou d'assistance et/ou de reporting assistés par ordinateur, comprenant :
- une premier système informatique (126), comportant une autre unité informatique, lequel gère dans une base de données, les données de base relatives aux clients et/ou aux machines (10) susceptibles d'être soumises à une maintenance, telles que les copieurs, imprimantes, scanner et télécopieurs ou appareils multifonction offrant les fonctionnalités correspondantes et dans lequel peuvent être entrées les données de demandes relatives au demandes de service ou de maintenance ;
- au moins un deuxième système informatique (102) mobile qui comporte une interface de communication de données pour la réception des données de commande de service du premier système informatique (126) par communication de données, en particulier par communication de données sans fil, et pour l'envoi au premier système informatique (126), des données de reporting se rapportant à des commandes de service terminées et/ou en cours, et/ou à des commandes de service suivantes et le cas échéant, à des données de commandes de pièces détachées, par communication de données, en particulier par communication de données sans fil ;
dans lequel le premier système informatique (126) génère de manière automatisée des données de commande de service, en s'appuyant sur les données de base et les données de demande, et les transmet au deuxième système informatique (102), celui-ci l'ayant éventuellement initié, par communication de données, et/ou dans lequel le deuxième système informatique (102) transmet de manière automatisée, les données de reporting au premier système informatique (126) par communication de données.

18. Système selon la revendication 17, **caractérisé en ce que** la fonctionnalité d'avertissement est conçue pour entrer dans le premier système informatique, des données de demande relatives à des demande de service ou de maintenance, au moyen de l'autre unité informatique, en fonction des données internes lues.

19. Système selon la revendication 17 ou 18, **caractérisé en ce que** la fonctionnalité de reporting est conçue pour transmettre des données de rapport à la première unité informatique, au moyen de l'autre unité informatique.

20. Système complet comprenant le système selon l'une quelconque des revendications 17 à 19 et associé audit système, le système de gestion de service et/ou d'assistance et/ou de reporting assistés par ordinateur, mentionnés dans la revendication 17.

21. Système complet comprenant plusieurs systèmes selon l'une quelconque des revendications 17 à 19 et associés en commun à ceux-ci, un système de gestion de service et/ou d'assistance et/ou de reporting assistés par ordinateur, mentionnés dans la revendication 17

22. Système complet comprenant plusieurs systèmes selon la revendication 20 ou 21 et associés en commun à ceux-ci, un système d'information assisté par ordinateur comportant au moins un système informatique qui gère dans une base de données, les données d'information relatives aux types de machines de bureau et à leur maintenance, pour appel par un système de gestion de service et/ou d'assistance et/ou de reporting et/ou envoi à ceux-ci par communication de données, et/ou qui offre une fonctionnalité de réception et de stockage dans une base de données ainsi qu'éventuellement d'analyse des données de reporting transmises par communication de données par les systèmes de gestion de service et/ou d'assistance et/ou de reporting.

23. Système selon l'une quelconque des précédentes revendications, **caractérisé en ce que** la fonctionnalité d'avertissement est conçue pour sélectionner en fonction des données lues ou des données dérivées s'appuyant sur celles-ci, des données parmi plusieurs appareils de communication associés et/ou plusieurs autres unités informatiques associées, à laquelle ou auxquelles les données et/ou les messages se rapportant à des opérations de maintenance ou de service préventives et/ou urgentes, sur au moins l'une des machines de bureau, doivent être mises à disposition ou envoyées.

24. Système selon l'une quelconque des précédentes revendications, **caractérisé en ce que** l'unité informatique de maintenance comporte une fonctionnalité de messages en multidiffusion et/ou de recherche, qui détecte les machines de bureau associées à chaque unité informatique associée, via le réseau informatique.

25. Système selon la revendication 24, **caractérisé en ce que** la fonctionnalité de messages en multidiffusion et/ou de recherche répond à la détection de chaque machine de bureau nouvellement associée et lit un jeu de données prédéfini de données internes de ladite machine de bureau via le réseau informatique, et le traite et/ou l'enregistre de manière prédéfinie.

26. Procédé de suivi et/ou de télémaintenance et/ou de gestion de plusieurs machines de bureau et/ou de mise à disposition d'une information se rapportant à l'une des machines de bureau au moins, **caractérisé par** une lecture de données internes, au moins de l'une des machines de bureau et/ou par un enregistrement de données internes, au moins de l'une des machines de bureau, par communication de données sans fil et/ou par communication de données via un réseau informatique et/ou par communication de données via une liaison modem, et par l'utilisation d'un système selon l'une quelconque des revendications précédentes.
